# EUROPEAN PATENT APPLICATION

(11) **EP 3 001 306 A1**
(43) Date of publication of application: **30.03.2016**
(21) Application number: 14382360.7
(22) Date of filing: 25.09.2014
(51) Int. Cl.: G06F 9/30

(54) **Bit group interleave processors, methods, systems, and instructions**

(71) Applicant: Intel Corporation, Santa Clara, CA 95054 (US)
(72) Inventor: Espasa, Roger, 08029 Barcelona (ES); Guillen Fandos, David, 43002 Tarragona (ES); Sole, Guillem, 08035 Barcelona (ES)
(74) Representative: Goddar, Heinz J.

(57) **Abstract**

A method in a processor includes receiving an instruction indicating a first source packed data operand having a first plurality of data elements each having a plurality of bit groups, and indicating a second source packed data operand having a second plurality of data elements each having a plurality of bit groups. Each data element of the first plurality corresponding to a different data element of the second plurality in a corresponding position. Each bit group in each data element of the first plurality corresponding to a different bit group in a corresponding position in a corresponding data element of the second plurality. Storing a result packed data operand in a destination storage location in response to the instruction. The result packed data operand including every other bit group of the first source packed data operand interleaved with every other corresponding bit group of the second source operand.

## Description

### BACKGROUND

### Technical Field

Embodiments described herein generally relate to processors. In particular, embodiments described herein generally relate to bit manipulation in processors.

### Background Information

Many processors have Single Instruction, Multiple Data (SIMD) architectures. Multiple data elements may be packed within one register or memory location as packed data or vector data. In packed data, the bits of the register or other storage location may be logically divided into a sequence of data elements (e.g., 8-bit, 16-bit, 32-bit, or 64-bit data elements). For example, a 128-bit wide packed data register may have two 64-bit wide data elements, four 32-bit data elements, or eight 16-bit data elements. Each of the data elements may represent a separate individual piece of data (e.g., a pixel color, a component of a complex number, etc.), which may be operated upon separately and/or independently of the others.

In SIMD architectures, a packed data instruction, vector instruction, or SIMD instruction may operate on multiple data elements or multiple pairs of data elements simultaneously or in parallel. The processor may have parallel execution hardware responsive to the packed data instruction to perform the multiple operations on the data elements or pairs of corresponding data elements simultaneously or in parallel.

### BRIEF DESCRIPTION OF THE DRAWINGS

The invention may best be understood by referring to the following description and accompanying drawings that are used to illustrate embodiments. In the drawings:
**Figure 1** is a block diagram of an embodiment of a processor that is operable to perform an embodiment of a bit group interleave instruction.
**Figure 2** is a block flow diagram of an embodiment of a method in a processor of performing an embodiment of a bit group interleave instruction.
**Figure 3** is a block diagram of an embodiment of a bit group interleave operation that may be performed to interleave odd-positioned bit groups.
**Figure 4** is a block diagram of an embodiment of a bit group interleave operation that may be performed to interleave even-positioned bit groups.
**Figure 5** is a block diagram of an example embodiment of an immediate suitable for an embodiment of a bit group interleave instruction.
**Figure 6** is a block diagram of an embodiment of a masked bit group interleave operation that may be performed to interleave even-positioned bit groups subject to a packed data operation mask.
**Figure 7** is a block diagram of an embodiment of a data element broadcast operation that may optionally be combined with a bit group interleave operation.
**Figure 8** is a block diagram of an embodiment of a bit group interleave instruction.
**Figure 9** **is** a block diagram of an example embodiment of a suitable set of packed data registers.
**Figure 10** is a block diagram of an example embodiment of a suitable set of packed data operation mask registers.
**Figures 11A-11C** are block diagrams illustrating a generic vector friendly instruction format and instruction templates thereof, according to embodiments of the invention.
**Figure 12A-B** is a block diagram illustrating an exemplary specific vector friendly instruction format and an opcode field, according to embodiments of the invention.
**Figure 13A-D** is a block diagram illustrating an exemplary specific vector friendly instruction format and fields thereof, according to embodiments of the invention.
**Figure 14** is a block diagram of an embodiment of a register architecture.
**Figure 15A** is a block diagram illustrating an embodiment of an in-order pipeline and an embodiment of a register renaming out-of-order issue/execution pipeline.
**Figure 15B** is a block diagram of an embodiment of processor core including a front end unit coupled to an execution engine unit and both coupled to a memory unit.
**Figure 16A** **is** a block diagram of an embodiment of a single processor core, along with its connection to the on-die interconnect network, and with its local subset of the Level 2 (L2) cache.
**Figure 16B** is a block diagram of an embodiment of an expanded view of part of the processor core of **Figure 16A****.**
**Figure 17** is a block diagram of an embodiment of a processor that may have more than one core, may have an integrated memory controller, and may have integrated graphics.
**Figure 18** is a block diagram of a first embodiment of a computer architecture.
**Figure 19** is a block diagram of a second embodiment of a computer architecture.
**Figure 20** is a block diagram of a third embodiment of a computer architecture.
**Figure 21** is a block diagram of a fourth embodiment of a computer architecture.
**Figure 22** is a block diagram of use of a software instruction converter to convert binary instructions in a source instruction set to binary instructions in a target instruction set, according to embodiments of the invention.

### DETAILED DESCRIPTION OF EMBODIMENTS

Disclosed herein are sub-data element sized bit group interleave instructions, processors to execute the instructions, methods performed by the processors when processing or executing the instructions, and systems incorporating one or more processors to process or execute the instructions. In the following description, numerous specific details are set forth (e.g., specific instruction operations, data formats, processor configurations, microarchitectural details, sequences of operations, etc.). However, embodiments may be practiced without these specific details. In other instances, well-known circuits, structures and techniques have not been shown in detail to avoid obscuring the understanding of the description.

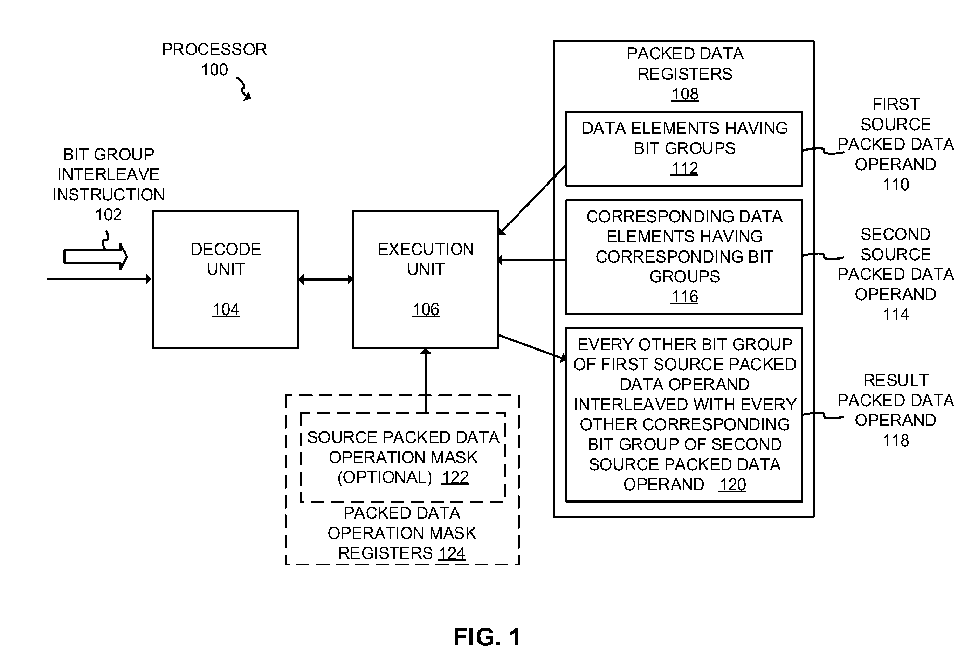

**Figure 1** is a block diagram of an embodiment of a processor 100 that is operable to perform an embodiment of a bit group interleave instruction 102. In some embodiments, the processor may be a general-purpose processor (e.g., a general-purpose microprocessor or central processing unit (CPU) of the type used in desktop, laptop, or other computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs), and controllers (e.g., microcontrollers). The processor may have any of various complex instruction set computing (CISC) architectures, reduced instruction set computing (RISC) architectures, very long instruction word (VLIW) architectures, hybrid architectures, other types of architectures, or have a combination of different architectures (e.g., different cores may have different architectures).

During operation, the processor 100 may receive the bit group interleave instruction 102. For example, the instruction may be received from memory on an interconnect. The instruction may represent a macroinstruction, assembly language instruction, machine code instruction, or other instruction or control signal of an instruction set of the processor. In some embodiments, the bit group interleave instruction may explicitly specify (e.g., through one or more fields or a set of bits), or otherwise indicate (e.g., implicitly indicate), a first source packed data operand 110, may specify or otherwise indicate a second source packed data operand 114, and may specify or otherwise indicate a destination storage location where a result packed data operand 118 is to be stored. As one example, the instruction may have source and/or destination operand specification fields to specify registers, memory locations, or other storage locations for the operands. Alternatively, one or more of these operands may optionally be implicit to the instruction (e.g., implicit to an opcode of the instruction). The first source packed data operand 110 may have a first plurality of data elements that are each to have a plurality of sub-data element sized bit groups 112. The second source packed data operand may have a second plurality of data elements that are each to have a plurality of sub-data element sized bit groups 116. Each data element of the first plurality of data elements may correspond to a different data element of the second plurality of data elements in a corresponding position. Each bit group in each data element of the first plurality of data elements may correspond to a different bit group in a corresponding position in a corresponding data element of the second plurality of data elements. In various embodiments, each of the bit groups may be a 1-bit sized bit group, a 2-bit sized bit group, a 4-bit sized bit group, a 8-bit sized bit group, a 16-bit sized bit group, and a 32-bit sized bit group. In some embodiments, each of the bit groups may have less than 8-bits (e.g., a 1-bit, 2-bit, or 4-bit sized bit group), although the scope of the invention is not so limited. In some embodiments, the instruction may have at least one bit group size indication bit (e.g., in an immediate) that is to indicate a size of the bit groups of the first source packed data operand.

Referring again to **Figure 1****,** the processor includes a decode unit or decoder 104. The decode unit may receive and decode the bit group interleave instruction. The decode unit may output one or more relatively lower-level instructions or control signals (e.g., one or more microinstructions, micro-operations, micro-code entry points, decoded instructions or control signals, etc.), which reflect, represent, and/or are derived from the relatively higher-level bit group interleave instruction. In some embodiments, the decode unit may include one or more input structures (e.g., port(s), interconnect(s), an interface) to receive the bit group interleave instruction, an instruction recognition and decode logic coupled therewith to recognize and decode the bit group interleave instruction, and one or more output structures (e.g., port(s), interconnect(s), an interface) coupled therewith to output the lower-level instruction(s) or control signal(s). The decode unit may be implemented using various different mechanisms including, but not limited to, microcode read only memories (ROMs), look-up tables, hardware implementations, programmable logic arrays (PLAs), and other mechanisms used to implement decode units known in the art.

In some embodiments, instead of the bit group interleave instruction being provided directly to the decode unit, an instruction emulator, translator, morpher, interpreter, or other instruction conversion module may optionally be used. Various types of instruction conversion modules are known in the arts and may be implemented in software, hardware, firmware, or a combination thereof. In some embodiments, the instruction conversion module may be located outside the processor, such as, for example, on a separate die and/or in a memory (e.g., as a static, dynamic, or runtime emulation module). By way of example, the instruction conversion module may receive the bit group interleave instruction, which may be of a first instruction set, and may emulate, translate, morph, interpret, or otherwise convert the bit group interleave instruction into one or more corresponding intermediate instructions or control signals, which may be of a second different instruction set. The one or more intermediate instructions or control signals of the second instruction set may be provided to a decode unit (e.g., decode unit 104), which may decode them into one or more lower-level instructions or control signals executable by native hardware of the processor (e.g., one or more execution units).

Referring again to **Figure 1****,** the processor also includes a set of packed data registers 108. Each of the packed data registers may represent an on-die storage location that is operable to store packed data, vector data, or Single instruction, multiple data (SIMD) data. The packed data registers may represent architecturally-visible or architectural registers that are visible to software and/or a programmer and/or are the registers indicated by instructions of the instruction set of the processor to identify operands. These architectural registers are contrasted to other non-architectural registers in a given microarchitecture (e.g., temporary registers, reorder buffers, retirement registers, etc.). The packed data registers may be implemented in different ways in different microarchitectures using well-known techniques and are not limited to any particular type of design. Examples of suitable types of registers include, but are not limited to, dedicated physical registers, dynamically allocated physical registers using register renaming, and combinations thereof.

In some embodiments, the first source packed data operand 110 may optionally be stored in a first packed data register, the second source packed data operand 114 may optionally be stored in a second packed data register, and the destination storage location may optionally be a third packed data register of the packed data registers 108. Alternatively, memory locations, or other storage locations, may optionally be used for one or more of these operands. Moreover, in some embodiments, a packed data register used for a source packed data operand may optionally be reused as a destination storage location for a result packed data operand. In one aspect, a source/destination register may be implicitly or impliedly understood to be used for both a source operand and a result operand.

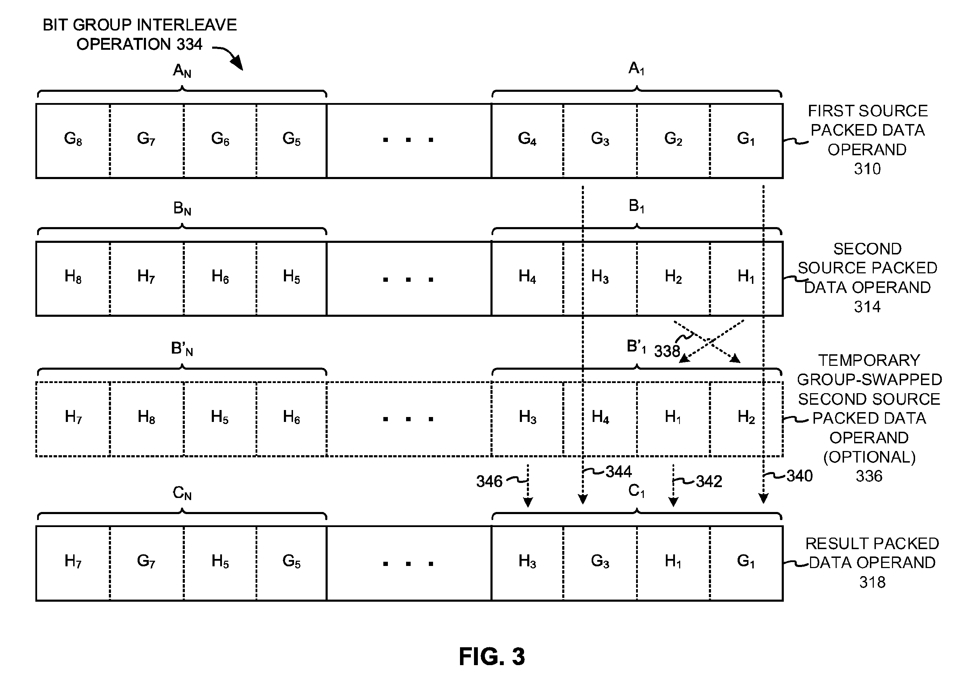

Referring again to **Figure 1****,** the execution unit 106 is coupled with the decode unit 104 and the packed data registers 108. The execution unit may receive the one or more decoded or otherwise converted instructions or control signals that represent and/or are derived from the bit group interleave instruction. The execution unit may also receive the first source packed data operand 110 and the second source packed data operand 114. The execution unit is operable in response to and/or as a result of the bit group interleave instruction (e.g., in response to one or more instructions or control signals decoded from the instruction) to store the result packed data operand 118 in the destination storage location indicated by the instruction. In some embodiments, the result packed data operand may include every other or alternate adjacent bit group of the first source packed data operand interleaved with every other or alternate adjacent corresponding bit group of the second source packed data operand. The corresponding bit groups may be in corresponding relative positions (e.g., corresponding bit positions) in the first and second source packed data operands. In some embodiments, the result may be any of those shown and described for **Figures 3-4** **or** **6**, although the scope of the invention is not so limited.

In some embodiments, the result packed data operand may include only odd-positioned bit groups of the first source packed data operand interleaved with corresponding odd-positioned bit group of the second source packed data operand. In other embodiments, the result packed data operand may include only even-positioned bit groups of the first source packed data operand interleaved with corresponding even-positioned bit group of the second source packed data operand. In some embodiments, the bit group interleave instruction may have at least one even/odd indication bit (e.g., in an immediate of the bit group interleave instruction) that is to indicate which one of the corresponding even-positioned and the corresponding odd-positioned bit groups of the first and second source packed data operands are to be included in the result packed data operand.

In some embodiments, the result packed data operand may include every other 1-bit, 2-bit, 4-bit, 8-bit, 16-bit, or 32-bit sized bit group of the first source packed data operand interleaved with every other corresponding 1-bit, 2-bit, 4-bit, 8-bit, 16-bit, or 32-bit sized bit group of the second source packed data operand. In some embodiments, the bit groups are 1-bit, 2-bit, or 4-bit sized bit groups, although the scope of the invention is not so limited. In some embodiments, the bit groups are included in data elements that are one of 32-bit doublewords and 64-bit quadwords, but are smaller than the 32-bit doublewords or the 64-bit quadwords.

Advantageously, the sub-data element sized bit group interleave instruction may be used to interleave bit groups which are smaller than data elements. In some embodiments, the bit groups may be smaller than the smallest size packed data element that the processor is capable of processing as packed data. In some embodiments, the processor may be capable of performing a packed data operation with saturation on these packed data elements but may not be able to perform such a packed data operation with saturation on at least one or more of the sub-data element sized bit groups. In some embodiments, a carry chain may not be broken on boundaries of the bit groups except for those that coincide with boundaries of packed data elements.

The execution unit and/or the processor may include specific or particular logic (e.g., transistors, integrated circuitry, or other hardware potentially combined with firmware (e.g., instructions stored in non-volatile memory) and/or software) that is operable to perform the bit group interleave instruction and/or store the result in response to and/or as a result of the bit group interleave instruction (e.g., in response to one or more instructions or control signals decoded from the bit group interleave instruction). In some embodiments, the execution unit may include one or more input structures (e.g., port(s), interconnect(s), an interface) to receive source operands, circuitry or logic coupled therewith to receive and process the source operands and generate the result operand, and one or more output structures (e.g., port(s), interconnect(s), an interface) coupled therewith to output the result operand. In some embodiments, the execution unit may include bit group swapping logic to swap positions of adjacent bit groups for all pairs of adjacent bit groups in one of the first and second source packed data operands, and masking and logical operation logic to select alternate bit groups, although the scope of the invention is not so limited.

To avoid obscuring the description, a relatively simple processor 100 has been shown and described. However, the processor may optionally include other well-known processor components. Possible examples of such components include, but are not limited to, general-purpose registers, a status register (sometimes called a flags register), system control registers, an instruction fetch unit, prefetch buffers, one or more levels of cache (e.g., a level 1 (L1) instruction cache, an L1 data cache, and an L2 data/instruction cache), an instruction translation lookaside buffer (TLB), a data TLB, a branch prediction unit, out-of-order execution units (e.g., an instruction scheduling unit, a register rename and/or allocation unit, an instruction dispatch unit, a reorder buffer (ROB), a reservation station, a memory order buffer, a retirement unit, etc.), a bus interface unit, an address generation unit, a debug unit, a performance monitor unit, a power management unit, other components included in processors, and various combinations thereof. Such components may be coupled together in various different suitable combinations and/or configurations known in the arts. Embodiments are not limited to any known such combination or configuration. Moreover, embodiments may be included in processors have multiple cores at least one of which is operative to perform a bit group interleave instruction.

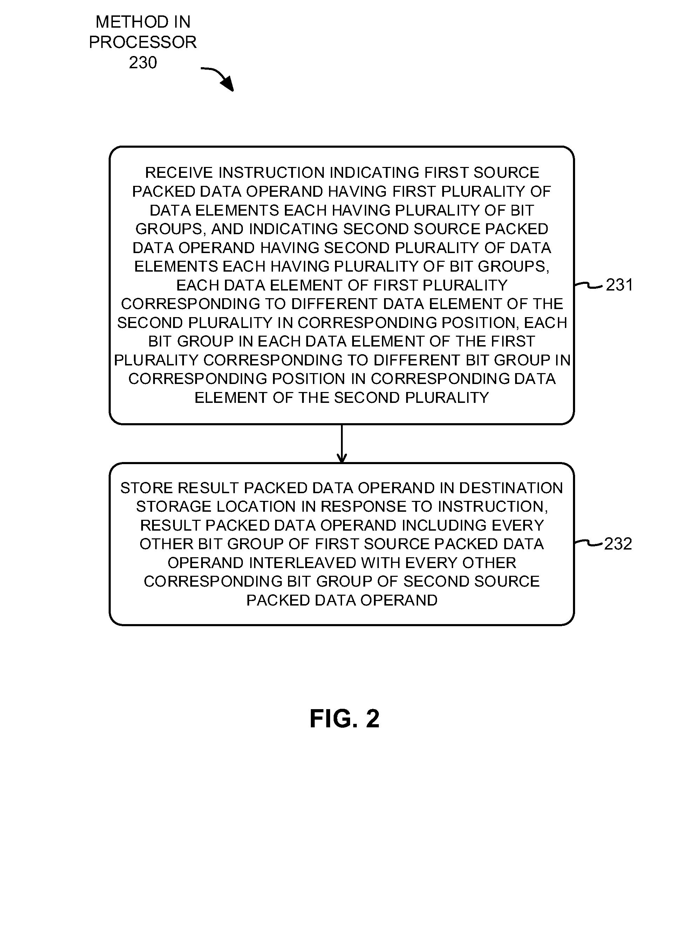

Figure 2 is a block flow diagram of an embodiment of a method 230 of performing an embodiment of a bit group interleave instruction. In some embodiments, the method of Figure 2 may be performed by and/or within the processor of **Figure 1****.** The components, features, and specific optional details described herein for the processor of **Figure 1****,** also optionally apply to the method of **Figure** 2. Alternatively, the method of **Figure 2** may be performed by and/or within a similar or different processor or apparatus. Moreover, the processor of **Figure 1** may perform methods the same as, similar to, or different than those of **Figure 2****.**

The method includes receiving the bit group interleave instruction, at block 231. In various aspects, the instruction may be received at a processor or a portion thereof (e.g., an instruction fetch unit, a decode unit, a bus interface unit, etc.). In various aspects, the instruction may be received from an off-processor and/or off-die source (e.g., from memory, interconnect, etc.), or from an on-processor and/or on-die source (e.g., from an instruction cache, instruction queue, etc.). The bit group interleave instruction may specify or otherwise indicate a first source packed data operand having a first plurality of data elements each having a plurality of bit groups. The instruction may specify or otherwise indicate a second source packed data operand having a second plurality of data elements each having a plurality of bit groups. Each data element of the first plurality of data elements may correspond to a different data element of the second plurality of data elements in a corresponding relative position (e.g., a corresponding bit position) within the operands. Each bit group in each data element of the first plurality of data elements may correspond to a different bit group in a corresponding relative position (e.g., a corresponding bit position) in a corresponding data element of the second plurality of data elements.

A result packed data operand may be stored in a destination storage location in response to and/or as a result of the bit group interleave instruction, at block 232. The destination storage location may be specified or otherwise indicated by the bit group interleave instruction. In some embodiments, the result packed data operand may include every other bit group of the first source packed data operand interleaved with every other corresponding bit group of the second source packed data operand. In some embodiments, the method may include receiving any of the bit group interleave instructions disclosed elsewhere herein, performing any of the bit group interleave operations disclosed elsewhere herein, and/or storing any of the result packed data operands for the bit group interleave instructions disclosed elsewhere herein.

The illustrated method involves architectural operations (e.g., those visible from a software perspective). In other embodiments, the method may optionally include one or more microarchitectural operations. By way of example, the instruction may be fetched, decoded, scheduled out-of-order, source operands may be accessed, an execution unit may perform microarchitectural operations to implement the instruction, etc.

**Figure 3** is a block diagram illustrating an embodiment of a bit group interleave operation 334 that may be performed to interleave odd-positioned bit groups in response to an embodiment of a bit group interleave instruction. The instruction may specify or otherwise indicate a first source packed data operand 310 having a first plurality of packed data elements A1 through AN. The instruction may also specify or otherwise indicate a second source packed data operand 314 having a second plurality of packed data elements B 1 through BN. Each data element of the first source packed data operand may correspond to a different data element of the second source packed data operand in a corresponding relative position (e.g., a corresponding bit position within the operands. For example, least significant data element A1 of the first source packed data operand may correspond to least significant data element B1 of the second source packed data operand, most significant data element AN may correspond to most significant data element BN, and so on.

Commonly, the number of data elements in each source packed data operand may be equal to the size in bits of the source packed data operand divided by the size in bits of a single data element. In various embodiments, the widths of each of the source packed data operands may be 64-bits, 128-bits, 256-bits, 512-bits, or 1024-bits, although the scope of the invention is not so limited. In various embodiments, the size of each data element may be 8-bits, 16-bits, 32-bits, or 64-bits, although the scope of the invention is not so limited. Other packed data operand sizes and data elements widths are also suitable. In various embodiments, there may be at least two, at least four, at least eight, at least sixteen, at least thirty-two, or more than thirty-two data elements (e.g., at least sixty four), in each of the source packed data operands.

Each data element of the first source packed data operand may have a plurality of bit groups. Likewise, each data element of the second source packed data operand may also have a plurality of bit groups. In the illustrated example, data element A₁ has bit groups G₁, G₂, G₃, and G₄, and data element AN has bit groups G₅, G₆, G₇, and G₈. Similarly, data element B₁ has bit groups H₁, H₂, H₃, and H₄, and data element B_{N} has bit groups H₅, H₆, H₇, and H₈. In other embodiments, each data element may have a different number of bit groups. Each bit group has less bits than the data element in which it is included. In some embodiments, each bit group may have a power of two number of bits. For example, in various embodiments, each bit group may have 1-bit, 2-bits, 4-bits, 8-bits, 16-bits, or 32-bits. There are multiple bit groups in each data element. For example, in the case of 64-bit data elements in the first and second source packed data operands, each 64-bit data element may have sixty-four 1-bit bit groups, thirty-two 2-bit bit groups, sixteen 4-bit bit groups, eight 8-bit bit groups, four 16-bit bit groups, or two 32-bit bit groups. Alternatively, 32-bit or other sized data elements may optionally be used. Each bit group in each data element of the first plurality of data elements of the first source packed data operand 310 may correspond to a different bit group in a corresponding relative position (e.g., a corresponding bit position) in a corresponding data element of the second plurality of data elements of the second source packed data operand. For example, in the illustration G₁ may correspond to H₁, G₂ may correspond to H₂, G₇ may correspond to H₇, and so on.

The illustrated bit group interleave operation shows an optional temporary group-swapped second source packed data operand 336. A set of cross arrows 338 are used to show how, in some embodiments, positions of adjacent bit groups may be swapped for all pairs of adjacent bit groups in a source packed data operand. For example, H₁ may be swapped into the relative bit position formerly occupied by H₂, while H₂ may be swapped into the relative bit position formerly occupied by H₁, and so on. In some embodiments, such a bit group swap operation may optionally be performed. In other embodiments, such a bit group swap operation may optionally be omitted. Such a bit group swap operation is one possible way, but not the only way, to produce the result packed data operand 318. In other embodiments, the relevant bit groups may merely be routed from their original positions in the second source packed data operand directly to the appropriate position in the result packed data operand without needing to perform such a bit group swap operation. As one illustrative example, data element B₁ and group swapped data element B'₁ may be as follows in the case of 4-bit sized bit groups:
B₁ = 0100 1110 0110 1100
B'₁ = 1110 0100 1100 0110

The optional bit group swap operation, which is optional, may offer certain advantages. For one thing, for bit group interleaving of the two sources, you only need to either shift left or shift right. However, if the optional bit group swap is performed, you can have a recursive auto bit-reversal operation (e.g., shift one bit group right and shift one bit group left), by reusing the same operand for both the first and second source packed data operands. For another thing, performing the swap operation or not performing the swap operation may allow the least significant bit group from either source operant to appear as the least significant bit group of the result packed data operand.

A result packed data operand 318 may be generated (e.g., by execution unit 106) and stored in a destination storage location in response to the bit group interleave instruction. The destination storage location may be specified or otherwise indicated by the instruction. In various embodiments, the destination storage location may be a packed data register, a memory location, or other storage location. The result packed data operand includes a plurality of packed data elements C₁ through C_{N} that each correspond to a different corresponding one of A₁ through AN and/or B₁ through B_{N}. In embodiments that use the optional temporary group-swapped second source packed data operand 336, a first arrow 340 shows how G₁ may be stored from the first operand to the result operand, a second arrow 342 shows how H₁ may be stored from the temporary group-swapped operand to the result operand, a third arrow 344 shows how G₃ may be stored from the first operand to the result operand, and a fourth arrow 346 shows how H₃ may be stored from the first operand to the result operand. In such a case, bit groups are selected alternatively from sequential bit group positions that correspond in bit position to each different bit group position in the result operand alternately from the first and second operands.

In some embodiments, the result packed data operand may include every other bit group of the first source packed data operand interleaved with every other corresponding bit group of the second source packed data operand. For example, the result packed data operand may include every other 1-bit, 2-bit, or 4-bit bit sized bit group of the first source packed data operand interleaved with every other corresponding same sized 1-bit, 2-bit, or 4-bit sized bit group of the second source packed data operand. As shown, in some embodiments, the result packed data operand may include only odd-positioned bit groups of the first source packed data operand interleaved with only corresponding odd-positioned bit group of the second source packed data operand. In the first source packed data operand, in bit sequential order from least significant to most significant bit positions, G₁ is the first-positioned (i.e., odd-positioned) bit group, G₂ is the second-positioned (i.e., even-positioned) bit group, G₃ is the third-positioned (i.e., odd-positioned) bit group, G₄ is the fourth-positioned (i.e., even-positioned) bit group, and so on. Likewise, in bit sequential order from least significant to most significant bit positions, in the second source packed data operand, H₁ is the first-positioned (i.e., odd-positioned) bit group, H₂ is the second-positioned (i.e., even-positioned) bit group, H₃ is the third-positioned (i.e., odd-positioned) bit group, H₄ is the fourth-positioned (i.e., even-positioned) bit group, and so on. Each pair of closest odd-positioned bit groups may represent non-contiguous bit groups that are separated by one intervening/intermediate even-positioned bit group. Notice that the illustrated result packed data operand has only all odd-positioned bit groups of the first and second source packed data operands (e.g., G₁, H₁, G₃, H₃, G₅, H₅, G₇, and H₇) but not any even-positioned bit groups of the first and second source packed data operands (e.g., G₂, H₂, G₄, H₄, G₆, H₆, G₈, and H₈). The illustrated result packed data operand includes only half of the bit groups from the first and second source packed data operands.

In some embodiments, interleaving bit groups (e.g., odd-positioned bit groups) may be implicit to and/or fixed for the instruction (e.g., an opcode of the instruction), instead of being explicitly specified and/or flexible for the instruction. For example, the instruction may not represent a highly flexible instruction like a full two source operand shuffle or permute instruction that uses extensive control to shuffle or permute data. The use of such a dedicated or implicit feature may help to avoid needing to generate and use such extensive explicit control (e.g., explicit control fields) to be used with a flexible instruction.

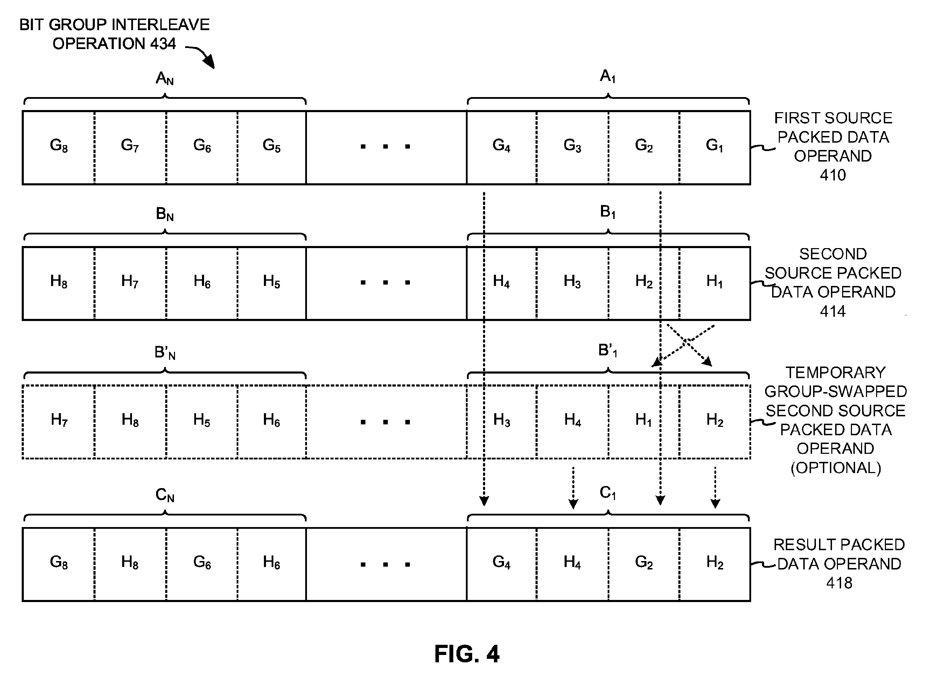

**Figure 4** is a block diagram illustrating an embodiment of a bit group interleave operation 334 that may be performed to interleave even-positioned bit groups in response to an embodiment of a bit group interleave instruction. The operation of **Figure 4** has certain similarities to the operation of **Figure 3****.** To avoid obscuring the description, the different and/or additional characteristics for the operation of **Figure 4** will primarily be described, without repeating all the optionally similar or common characteristics and details relative to the operation of **Figure 3****.** However, it is to be appreciated that, except for those characteristics and details that pertain to interleaving the even-positioned bit groups instead of the odd-positioned bit groups, the previously described characteristics and details of the operation of **Figure 3** may also optionally apply to the operation of **Figure 4****,** unless stated otherwise or otherwise clearly apparent.

As before, the instruction may specify or otherwise indicate a first source packed data operand 410 having a first plurality of packed data elements A₁ through AN each having a corresponding plurality of bit groups (e.g., G₁-G₄ and G₅-G₈), and may specify or otherwise indicate a second source packed data operand 414 having a corresponding second plurality of packed data elements B₁ through B_{N} each having a corresponding plurality of bit groups (e.g., H₁-H₄ and H₅-H₈). Each data element of the first source packed data operand may correspond to a different data element of the second source packed data operand in a corresponding relative position (e.g., a corresponding bit position within the operands. Each bit group in each data element of the first source packed data operand 410 may correspond to a different bit group in a corresponding relative position (e.g., a corresponding bit position) in a corresponding data element of the second source packed data operand 414. The first and second source packed data operands, their data elements, and their bit groups, may be the same as or similar to those of **Figure 3****,** and may have the same variations and alternatives. In some embodiments, each bit group may have 1-bit, 2-bits, 4-bits, 8-bits, 16-bits, or 32-bits, and each data element may have at least twice as many or more bits.

A result packed data operand 418 may be generated (e.g., by execution unit 106) and stored in a destination storage location in response to the bit group interleave instruction/operation. The destination storage location may be specified or otherwise indicated by the instruction. In various embodiments, the destination storage location may be a packed data register, a memory location, or other storage location. The result packed data operand includes a plurality of packed data elements C₁ through C_{N} that each correspond to a different corresponding one of A₁ through AN and/or B₁ through B_{N}. The result packed data operand may include every other bit group of the first source packed data operand interleaved with every other corresponding bit group of the second source packed data operand. As shown, in some embodiments, the result packed data operand may include only even-positioned bit groups of the first source packed data operand interleaved with only corresponding even-positioned bit group of the second source packed data operand. Each pair of closest even-positioned bit groups may represent non-contiguous bit groups that are separated by one intervening/intermediate odd-positioned bit group. The illustrated result packed data operand has only all even-positioned bit groups of the first and second source packed data operands (e.g., G₂, H₂, G₄, H₄, G₆, H₆, G₈, and H₈) but not any odd-positioned bit groups of the first and second source packed data operands (e.g., none of G₁, H₁, G₃, H₃, G₅, H₅, G₇, and H₇). The illustrated result packed data operand includes only half of the bit groups from the first and second source packed data operands. The even-positioned bit groups that are included in the result operand span substantially the entire length of the first and second source packed data operands (e.g., are not included in a lowest-order or highest-order half of these operands). Notice also that in **Figure 4** the least significant bit group (H₂) of the result operand was taken from the second source operand 414, whereas in **Figure 3** the least significant bit group (G₁) of the result operand was taken from the first source operand 310. In some embodiments, not only is it possible to switch between even and odd but also it is possible to switch from which source operand the least significant bit group of the source operands is taken from.

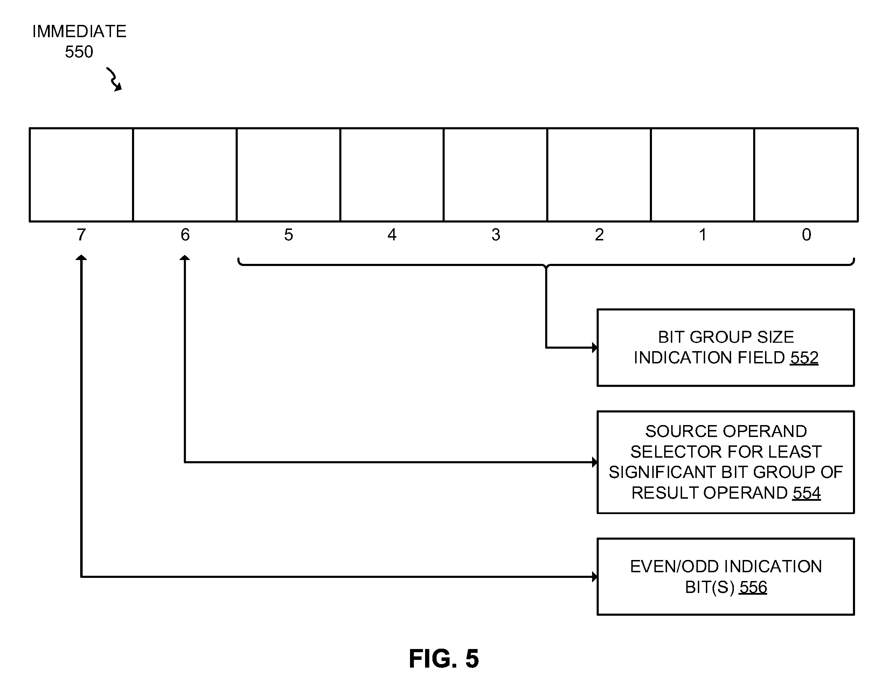

**Figure 5** is a block diagram of an example embodiment of an immediate 550 suitable for an embodiment of a bit group interleave instruction. The illustrated immediate is an 8-bit immediate (imm8). In the illustrated immediate, bits [5:0] represent a bit group size indication field and/or a set of bit group size indication bits that are to specify or otherwise indicate a size of the bit groups of the source packed data operands. In some embodiments, the field or bits may be used to explicitly specify the size in bits of the bit groups (e.g., specify a value of 2 for 2-bit sized bit groups, specify a value of 4 for 4-bit sized bit groups, and so on). In other embodiments, the field or bits may be used to provide an arbitrary code or number to select from a plurality of different sizes (e.g., a single bit may have a value of binary-0 to select a 2-bit sized bit group or a value of binary-1 to select a 4-bit sized bit group). In some embodiments, the field or bits may be used to indicate any one of a 1-bit, 2-bit, 4-bit, 8-bit, 16-bit, or 32-bit sized bit group, although the scope of the invention is not so limited. Each of these may represent a different granularity for the bit groups.

In the illustrated immediate, bit [6] is used to specify or otherwise indicate one of the first and second source packed data operands to provide the least significant bit group of the result operand. This may indicate whether the result packed data operand is to have, as a least significant bit group, a least significant bit group of one of the first and second source packed data operands or a next-to-least significant bit group of another (i.e., a different one) of the first and second source packed data operands.

In the illustrated immediate, bit [7] represents an even or odd (even/odd) indication field and/or a set of one or more even/odd indication bits that are to specify or otherwise indicate whether corresponding even-positioned or corresponding odd-positioned bit groups of the first and second source packed data operands are to be included in the result packed data operand. In one embodiment, a single bit may have a first value (e.g., according to one possible convention be set to binary one) to indicate that corresponding even-positioned bit groups from the source operands are to be stored in the result operand, or the single bit may have a second different value (e.g., be cleared to binary zero) to indicate that corresponding odd-positioned bit groups from the source operands are to be stored in the result operand.

It is to be appreciated that this is just one example of a suitable immediate. In other embodiments, either larger immediates (e.g., 16-bit, 32-bit) or smaller immediates (e.g., 4-bit, 6-bit) may optionally be used instead of an 8-bit immediate. In other embodiments, either larger or smaller fields or sets of bits may be used to specify or otherwise indicate the bit group size and/or even/odd indication. Moreover, the fields or sets of bits may optionally be rearranged variously and need not include contiguous bits.

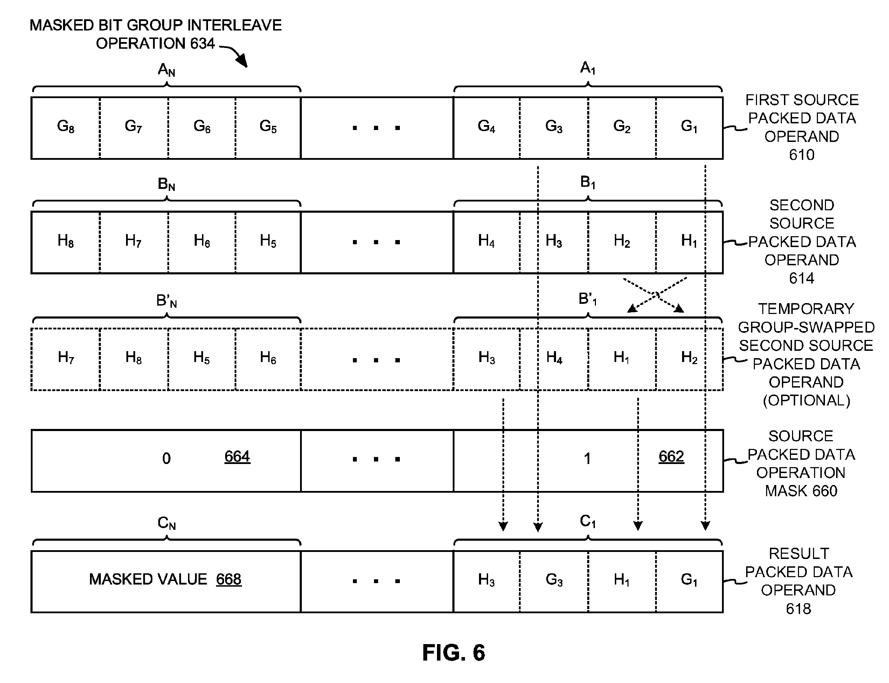

**Figure 6** is a block diagram illustrating an embodiment of a masked bit group interleave operation 634 that may be performed to interleave even-positioned bit groups subject to a packed data operation mask 660 in response to an embodiment of a masked bit group interleave instruction. The masked operation of **Figure 6** has certain similarities to the unmasked operation of **Figure 3****.** To avoid obscuring the description, the different and/or additional characteristics for the masked operation of **Figure 6** will primarily be described, without repeating all the optionally similar or common characteristics and details relative to the unmasked operation of **Figure 3****.** However, it is to be appreciated that the previously described characteristics and details of the unmasked operation of **Figure 3** may also optionally apply to the masked operation of **Figure 6****,** unless stated otherwise or otherwise clearly apparent.

The masked bit group interleave instruction may specify or otherwise indicate a first source packed data operand 610, and a second source packed data operand 614. As in the previously described operation of **Figure 4****,** the first source packed data operand may have a first plurality of data elements that are each to have a plurality of bit groups, and the second source packed data operand may have a second plurality of data elements that are each to have a plurality of bit groups. Each data element of the first plurality of data elements may correspond to a different data element of the second plurality of data elements in a corresponding position. Each bit group in each data element of the first plurality of data elements may correspond to a different bit group in a corresponding position in a corresponding data element of the second plurality of data elements. The first and second source packed data operands, their data elements, and their bit groups, may be the same as or similar to those of **Figure 3****,** and may have the same variations and alternatives.

The masked bit group interleave instruction may also specify (e.g., explicitly specify) or otherwise indicate (e.g., implicitly indicate) a source packed data operation mask 660. The packed data operation mask may also be referred to herein simply as an operation mask, predicate mask, or mask. The mask may represent a predicate operand or conditional control operand that is used to predicate, conditionally control, or mask whether or not corresponding operations are to be performed and/or corresponding results are to be stored. In some embodiments, the masking or predication may be at per-data element granularity such that operations on different pairs of corresponding data elements may be predicated or conditionally controlled separately and/or independently of others. The mask may include multiple mask elements, predicate elements, or conditional control elements. In one aspect, the mask elements may be included in a one-to-one correspondence with corresponding pairs of source data elements in the first and second source packed data operands (e.g. a mask element corresponding to A1 and B1) and/or corresponding result data elements. The mask may have a mask element for each data element in the first source packed data operand (e.g., a first mask element for data element A1 through an Nth mask element for data element AN) and/or each result data element. Notice that in such an embodiment multiple bit groups may correspond to the same mask element and/or there may be multiple times as many bit groups in each source operand as there are mask elements in the source packed data operation mask.

As shown, in some embodiments, each mask element may be a single mask bit. Alternatively, two or more bits may optionally be used for each mask element (e.g., each mask element may have a same number of bits as each corresponding source data element and these bits may either all have the same value or a single bit among these bits may be used as a mask bit). Other numbers of bits are also possible. A value of each mask bit may control whether or not a corresponding operation is to be performed and/or a corresponding result data element is to be stored. Each mask element or bit may have a first value to allow the operation to be performed and allow the corresponding result data element to be stored in the destination, or may have a second different value to not allow the operation to be performed and/or not allow the corresponding result data element to be stored in the destination. According to one possible convention, as shown in the illustration, a mask bit cleared to binary zero (i.e., 0) may represent a masked out operation where the operation need not be performed and/or the corresponding result data element need not be stored, whereas a mask bit set to binary one (i.e., 1) may represent an unmasked operation where the corresponding result data element is to be stored. The opposite convention is also possible.

The embodiment of the masked bit group interleave operation 634 may be performed (e.g., by the execution unit 106) in response to and/or as a result of the embodiment of the masked bit group interleave instruction. The masked operation may be performed subject to the masking, predication, or conditional control of the source packed data operation mask 660. As before, a result packed data operand 618 may be generated (e.g., by the execution unit 106) and stored in a destination storage location in response to the masked bit group interleave instruction. The result packed data operand may include a plurality of result data elements C1 through CN that each correspond to a different pair of source data elements in same relative positions (e.g., C1 may correspond to A1 and B1, etc.). In some embodiments, the result data elements that correspond to unmasked mask elements may have values that depend on the bit group interleave operation performed on the corresponding pair of source data elements. In contrast, the result data elements corresponding to masked-out mask elements may have values that do not depend on the operation performed on the corresponding pair of source data elements. Rather, these result data elements may have fixed or predetermined values. For example, either the corresponding operation need not be performed, or if the corresponding operation is performed then the corresponding result need not be stored in the destination. Rather, a fixed or predetermined value may be stored in the corresponding result data element.

In the illustrated example, which is only an illustrative example, a first masked element 662 is unmasked (e.g., has a value of binary-1), whereas an Nth mask element 664 is masked (e.g., has a value of binary-0). As a result, a data element C1 may be stored in the result packed data operand that includes interleaved corresponding odd-positioned bit groups from the first and second source packed data operands. In contrast, the data element CN, which corresponds to a masked-out mask element, may store a masked value 668. The masked value may represent a fixed or predetermined value. The particular masked, fixed, or predetermined value may depend on the type of masking used for the particular implementation. In some embodiments, zeroing masking may be used. In zeroing masking, the masked-out result data elements (e.g., CN) may be zeroed-out (e.g., be forced to have a value of zero). In other embodiments, merging masking may be used. In merging masking, the masked-out result data elements may have a value of one of the corresponding source data elements (e.g., the corresponding source data element may be passed through to the masked-out result data element). For example, CN may store the value of either AN or BN in merging masking.

The illustrated embodiment shows a masked bit group interleave operation 634 that may be performed to interleave even-positioned bit groups subject to a packed data operation mask 660. Another embodiment pertains to a masked bit group interleave operation that may be performed to interleave odd-positioned bit groups subject to a packed data operation mask (e.g., masking may optionally be combined with an embodiment similar to or the same as that shown in **Figure 3****).**

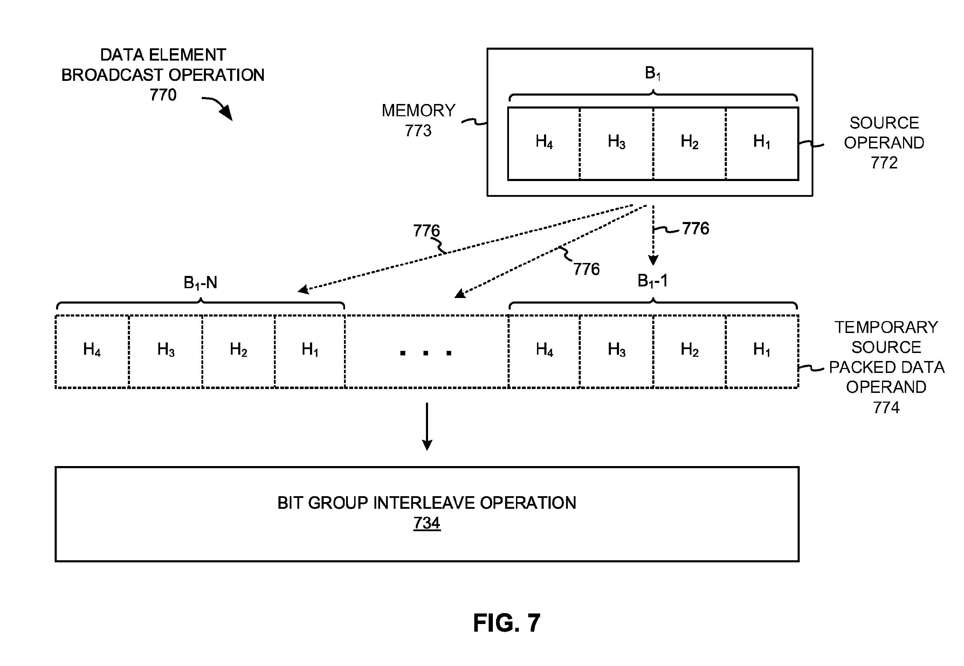

**Figure 7** is a block diagram illustrating an embodiment of an embodiment of a data element broadcast operation 770 that may optionally be combined with a bit group interleave operation 734 in response to an embodiment of a bit group interleave with data element broadcast instruction. In some embodiments, the instruction may optionally have a set of one or more bits or a broadcast indication field to indicate that data element broadcast is to be performed. In other embodiments, the data element broadcast operation may optionally be implicit to the instruction (e.g., implicit to an opcode). The instruction may indicate a source operand 772 having a single data element (e.g., data element B1) that is to be broadcast or replicated. The source operand may be a scalar operand having only a single data element as opposed to a packed data operand having a plurality of data elements. In some embodiments, the single data element (e.g., B1) may be stored in a memory location 773 (e.g., in main memory), although this is not required. In such embodiments, the single data element may first be accessed from the memory location (e.g., through a load or other memory access operation decoded or otherwise derived from the instruction). The single data element may then be broadcast or replicated 776 multiple times to create multiple copies of the single data element (e.g., B1-1 through B1-N). In some embodiments, a different replica or copy of the data element B1 may be created for each data element of another source packed data operand indicated by the instruction (e.g., the first source packed data operand 310 having data elements A1 through AN). In the illustration, the multiple replicas or copies of the data element are shown together in a temporary source packed data operand 774. This temporary source packed data operand is shown in dashed lines to indicate that, in some embodiments, the replicas or copies of the single data element may be stored together in a temporary register or other non-architectural storage location, but, in other embodiments, the replicas or copies of the data element may not ever actually be stored together in a register or storage location but may merely be provided to the execution unit. The broadcast or replicated data elements (e.g., the temporary source packed data operand) may be provided to a bit group interleave operation 734, which may represent any of the bit group interleave operations described elsewhere herein. The bit group interleave operation may be performed on the broadcast or replicated data elements substantially as has been described for the source packed data operands previously described. Advantageously, incorporating the data element broadcast operation with the bit group interleave operation may help to increase the efficiency of various applications where it is desired to use the same single data element or value for each of multiple vector, packed data, or SIMD operations interleave bit groups.

To further illustrate certain concepts, consider the following detailed example embodiments for an bit group interleave instruction named VPREVCROSSQ. Table 1 lists opcodes, encodings, and operation descriptions for several different embodiments of this instruction.

**Table 1. VPREVCROSSQ - Bit Reversal and Crossing of Packed Integers**

| **Opcode/ Instruction** | **Operation Description** |
|---|---|
| EVEX.NDS.128.F3.0F3A.W1 A0 /r ib | Reverses of grouped bits within an element from the second source and combines them with the first source by selecting groups of bits in an alternate pattern. |
| VPREVCROSSQ xmm1 {k1}{z}, xmm2, xmm3/m128/m64bcst, imm8 | |
| EVEX.NDS.256.F3.0F3A.W1 A0 /r ib | Reverses of grouped bits within an element from the second source and combines them with the first source by selecting groups of bits in an alternate pattern |
| VPREVCROSSQ ymm1 {k1}{z}, ymm2, ymm3/m256/m64bcst, imm8 | |
| EVEX.NDS.512.F3.0F3A.W1 A0 /r ib | Reverses of grouped bits within an element from the second source and combines them with the first source by selecting groups of bits in an alternate pattern |
| VPREVCROSSQ zmm1 {k1}{z}, zmm2, zmm3/m512/m64bcst, imm8 | |

EVEX refers to an EVEX encoding as described elsewhere herein. Xmm*, ymm*, and zmm* respectively represent 128-bit, 256-bit, and 512-bit packed data registers. The {k1} operand specifies a mask register (e.g., one of mask registers k0-k7) used as a source packed data operation mask or predication mask. The {z} indicates the type of masking (e.g., merging-masking or zeroing masking). The m64bcst indicates a broadcast of a 64-bit data element from memory to multiple elements of a source vector.

Table 2 lists the instruction operand encoding. ModRM allows for register (reg) or register or memory (r/m). The (r) indicates read and the (w) indicates write.

**Table 2. Instruction Operand Encoding**

| Operand1 | Operand2 | Operand3 | Operand4 |
|---|---|---|---|
| ModRM:reg(w) | EVEX.vvvv (r) | ModRM:r/m (r) | imm8 (r) |

The VPREVCROSSQ instruction performs swapping or reversal of grouped bits within an element from the second source and combines them with the first source by selecting groups of bits in an alternate pattern. The immediate controls the operation: imm8[5:0] control the length of the bit groups, while imm8[7] controls the ordering of the crossing pattern for the two operands, and imm8[6] is not presently used. Bit groups are paired forming blocks of bits of sizes between 1 and 32 bits in power of two bit group sizes (e.g., 1-bit, 2-bits, 4-bits, 8-bits, 16-bits, or 32-bits) so all the groups have a pair. Each group is paired with its neighbor and exchanged (swapped) with it intra-operand. The first source operand is a vector register. The second source operand is a vector register or a memory location. The destination operand is a vector register.

An example of pseudocode for an embodiment of the VPREVCROSSQ instruction is shown below. SRC1 represents a first source packed data operand, SRC2 represents a second source packed data operand, DEST represents a destination. TSRC2 represnts a temporary register. Qword represents a 64-bit quadword. The k1 operand represents a packed data operation mask or predication mask. In the pseudocode, "j" represents a quadword position counter within the operands, KL represents a mask length and/or the number of data element positions within a packed data operand, and VL represents a length of the vectors or packed data operands. EVEX.b==1 configures embedded broadcast when SRC2 *is memory*. The parameter "h" is the group length. Various parameters are shown in hexadecimal notation (e.g., 0x5555555555555555UL) and represent microarchitectural masks. The symbol "I" represents a logical OR, the symbol "&" represents a logical AND, "« 2" represents a left shift by 2-bits, and "» 4" represents a right shift by 4-bits. This pseudocode does not reflect the optional bit group swap operation, but an alternate embodiment is contemplated that incorporates such a bit group swap operation.

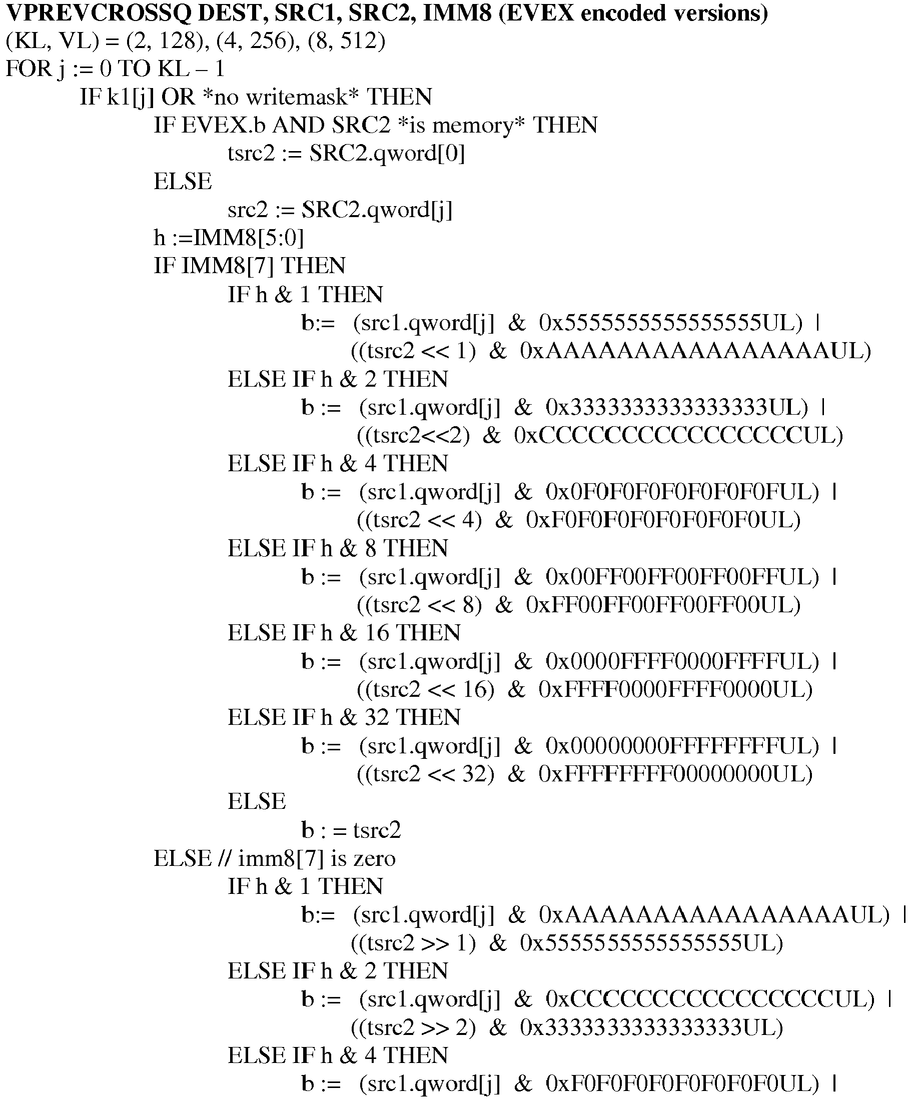

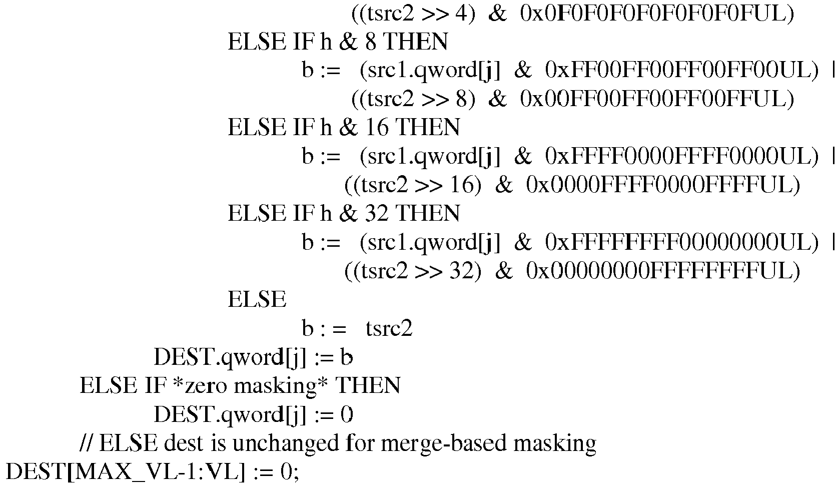

It is to be appreciated that these are just a few example embodiments of suitable instructions. Other embodiments may use fewer or more group sizes. One alternate embodiment may use either a subset of the shown group sizes or just a single group size selected from a single 1-bit, 2-bit, 4-bit, 8-bit, 16-bit, or 32-bit group size. Other embodiments may use a fixed approach to the alternating pattern (e.g., rather than using imm8[7]). Other embodiments may use narrower (e.g., 64-bit), wider (e.g., 1024-bit), or just differently sized packed data operands. In alternate embodiments, other storage locations (e.g. memory locations) may be used for operands. Other embodiments may optionally omit masking/predication. Other embodiments may optionally omit data element broadcast.

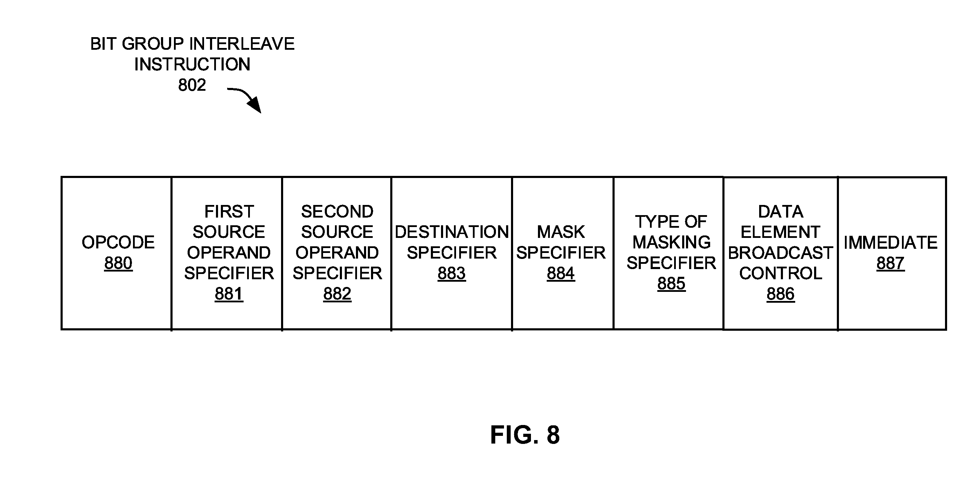

**Figure 8** is a block diagram of an embodiment of a bit group interleave instruction 802. The instruction has a format that includes an operation code or opcode 880. The opcode may represent a plurality of bits or one or more fields that are operable to identify the instruction and/or the operation to be performed (e.g., a bit group interleave operation).

The instruction format also includes a first source operand specifier 881 to explicitly specify a register, memory location, or other storage location used to store a first source operand, a second source operand specifier 882 to explicitly specify a register or other storage location used to store a second source operand, and a destination specifier 883 to explicitly specify a register or other storage location to be used as a destination where a result operand is to be stored. By way of example, each of these specifiers may include a set of bits or one or more fields to explicitly specify an address of a register, memory location, or other storage location. Alternatively, instead of the instruction having explicit specifiers for each of these storage locations, the instruction may optionally have one or more implicit storage locations (e.g., a register implicit to an opcode of the instruction) for one or more of the source operands and the result operand. For example, it may be implicit to an opcode of the instruction to use a given fixed register for a source operand or the result operand so that the given fixed register doesn't need to be explicitly specified. As another example, it may be implicit to reuse a register or other storage location (e.g., explicitly specified once) for both a source operand and subsequently for the result operand (e.g., an implicit source/destination register).

In some embodiments, the instruction format may include an optional packed data operation mask specifier 884 to explicitly specify a packed data operation mask (e.g., a packed data operation mask register). Alternatively, the packed data operation mask may be implicitly indicated. In some embodiments, the packed data operation mask register may be one of a different set of registers than used for the source and result operands (e.g., a dedicated set of mask or predication registers). In some embodiments, the instruction format may also include an optional type of masking operation specifier 885 to specify a type of masking operation. By way of example, the type of masking operation specifier may include a single bit to specify whether merging-masking or zeroing-masking is to be performed. Alternatively, the type of masking operation may be implicitly indicated (e.g., in an implicit control register, implicit to an opcode of the instruction, etc.). Masking is optional and not required.

In some embodiments, in which the instruction is to use data element broadcast, the instruction may optionally include a data element broadcast control 886. The data element broadcast control may include one or more bits or fields to indicate that data element broadcast is to be performed to broadcast a single source data element accessed from a storage location (e.g., a memory location) to a plurality of source data elements (e.g., in a temporary register) that are to be used by the instruction/operation. Alternatively, data element broadcast may be implicit to the instruction (e.g., implicit to the opcode) instead of being explicitly specified. As mentioned above, data element broadcast is optional and not required.

It is to be appreciated that this is just one illustrative example of a suitable bit group interleave instruction. Alternate embodiments may include a subset of the illustrated fields/specifiers, may add additional fields/specifiers, may overlap certain fields/specifiers, etc. In addition, the illustrated order and arrangement of the fields/specifiers is not required. The fields/specifiers may be rearranged variously. In addition, fields/specifiers need not include contiguous sequences of bits, but rather may include non-contiguous or separated bits. In some embodiments, the instruction format may have a VEX or EVEX encoding or instruction format, although the scope of the invention is not so limited. Further details on VEX and EVEX encodings and formats are discussed further below.

The bit group interleave instructions disclosed herein are general-purpose instructions and may be used for various and/or general purposes. In some embodiments, the bit group interleave instructions may optionally be used for matrix transposition (e.g., to transform 64-bit by 64-bit matrices), for example, using in-place bit transposition. Representatively, the transposing may be done using block transposing. Multiple block transposing steps may be performed sequentially and each with a different size bit group (e.g., initially 16-bit groups, then 8-bit groups, then 4-bit groups, and so on). In some embodiments, a bit group interleave instruction may indicate and/or be used to operate on a source packed data operand that includes bit groups from two or more rows of two or more different 64-bit by 64-bit matrices (e.g., row0 of a first matrix, row 0 of a second matrix, optionally row 0 of a third matrix, and optionally row 0 of a fourth matrix all in the same source packed data operand). In other embodiments, a bit group interleave instruction may indicate and/or be used to operate on a source packed data operand that includes bit groups from two or more rows of a single 64-bit by 64-bit bit matrix (e.g., row 0 of a first matrix, row 1 of the first matrix, optionally row 2 of the first matrix, and optionally row 3 of the first matrix, all in a same source packed data operand). Alternatively, the bit group interleave instructions may optionally be used for other purposes, such as, for example, generic bit reversal operations and/or to revers bits in a grouped power-of-two pattern. These are just a few examples.

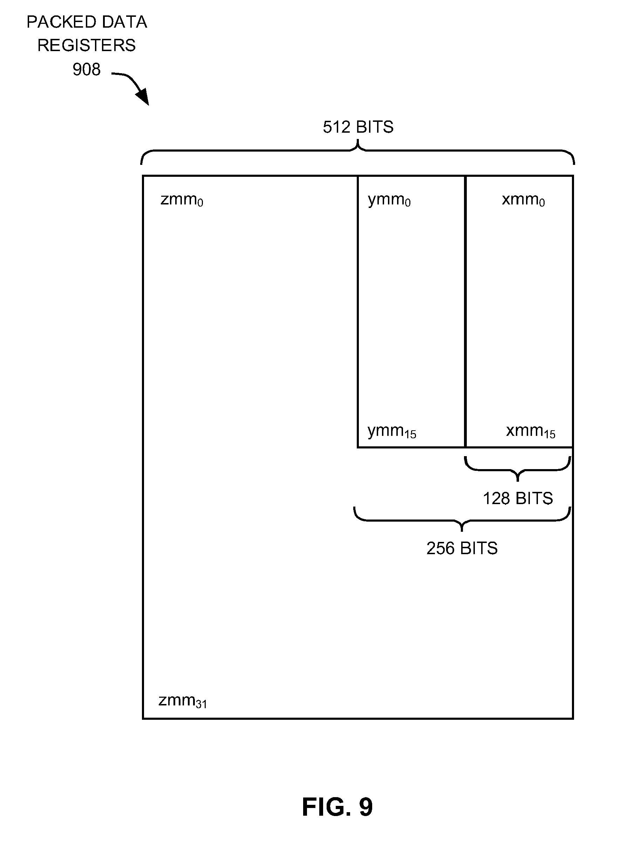

**Figure 9** is a block diagram of an example embodiment of a suitable set of packed data registers 908. The packed data registers include thirty-two 512-bit packed data registers labeled ZMM0 through ZMM31. In the illustrated embodiment, the lower order 256-bits of the lower sixteen registers, namely ZMM0-ZMM15, are aliased or overlaid on respective 256-bit packed data registers labeled YMM0-YMM15, although this is not required. Likewise, in the illustrated embodiment, the lower order 128-bits of the registers YMM0-YMM15 are aliased or overlaid on respective 128-bit packed data registers labeled XMM0-XMM15, although this also is not required. The 512-bit registers ZMM0 through ZMM31 are operable to hold 512-bit packed data, 256-bit packed data, or 128-bit packed data. The 256-bit registers YMM0-YMM15 are operable to hold 256-bit packed data or 128-bit packed data. The 128-bit registers XMM0-XMM15 are operable to hold 128-bit packed data. In some embodiments, each of the registers may be used to store either packed floating-point data or packed integer data. Different data element sizes are supported including at least 8-bit byte data, 16-bit word data, 32-bit doubleword, 32-bit single-precision floating point data, 64-bit quadword, and 64-bit double-precision floating point data. In alternate embodiments, different numbers of registers and/or different sizes of registers may be used. In still other embodiments, registers may or may not use aliasing of larger registers on smaller registers and/or may or may not be used to store floating point data.

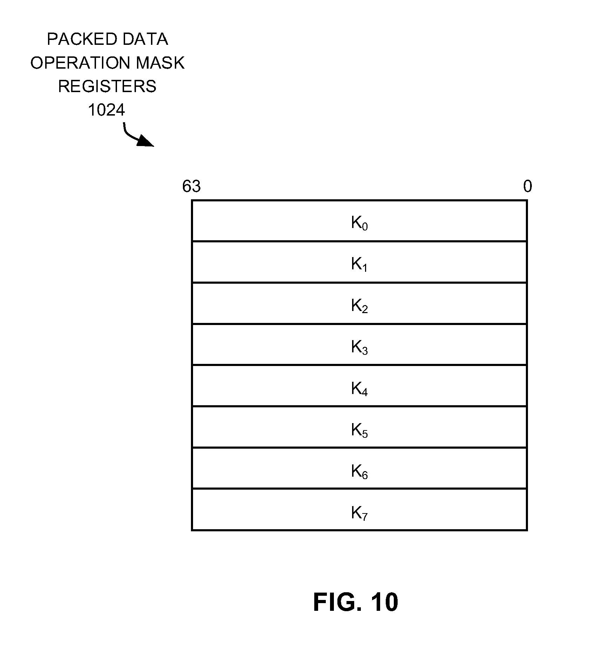

**Figure 10** is a block diagram of an example embodiment of a suitable set of packed data operation mask registers 1024. In the illustrated embodiment, the set includes eight registers labeled k0 through k7. Alternate embodiments may include either fewer than eight registers (e.g., two, four, six, etc.), or more than eight registers (e.g., sixteen, thirty-two, etc.). Each of these registers may be used to store a packed data operation mask. In the illustrated embodiment, each of the registers is 64-bits. In alternate embodiments, the widths of the registers may be either wider than 64-bits (e.g., 80-bits, 128-bits, etc.), or narrower than 64-bits (e.g., 8-bits, 16-bits, 32-bits, etc.). The registers may be implemented in different ways using well known techniques and are not limited to any known particular type of circuit. Examples of suitable registers include, but are not limited to, dedicated physical registers, dynamically allocated physical registers using register renaming, and combinations thereof.

In some embodiments, the packed data operation mask registers 1024 may be a separate, dedicated set of architectural registers. In some embodiments, the instructions may encode or specify the packed data operation mask registers in different bits or one or more different fields of an instruction format than those used to encode or specify other types of registers (e.g., packed data registers). By way of example, an instruction may use three bits (e.g., a 3-bit field) to encode or specify any one of the eight packed data operation mask registers k0 through k7. In alternate embodiments, either fewer or more bits may be used, respectively, when there are fewer or more packed data operation mask registers. In one particular implementation, only packed data operation mask registers k1 through k7 (but not k0) may be addressed as a predicate operand to predicate a masked packed data operation. The register k0 may be used as a regular source or destination, but may not be encoded as a predicate operand (e.g., if k0 is specified it has a "no mask" encoding), although this is not required.

An instruction set includes one or more instruction formats. A given instruction format defines various fields (number of bits, location of bits) to specify, among other things, the operation to be performed (opcode) and the operand(s) on which that operation is to be performed. Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to the Advanced Vector Extensions (AVX) (AVX1 and AVX2) and using the Vector Extensions (VEX) coding scheme, has been , has been released and/or published (e.g., see Intel® 64 and IA-32 Architectures Software Developers Manual, October 2011; and see Intel® Advanced Vector Extensions Programming Reference, June 2011).

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### VEX Instruction Format

VEX encoding allows instructions to have more than two operands, and allows SIMD vector registers to be longer than 128 bits. The use of a VEX prefix provides for three-operand (or more) syntax. For example, previous two-operand instructions performed operations such as A = A + B, which overwrites a source operand. The use of a VEX prefix enables operands to perform nondestructive operations such as A = B + C.

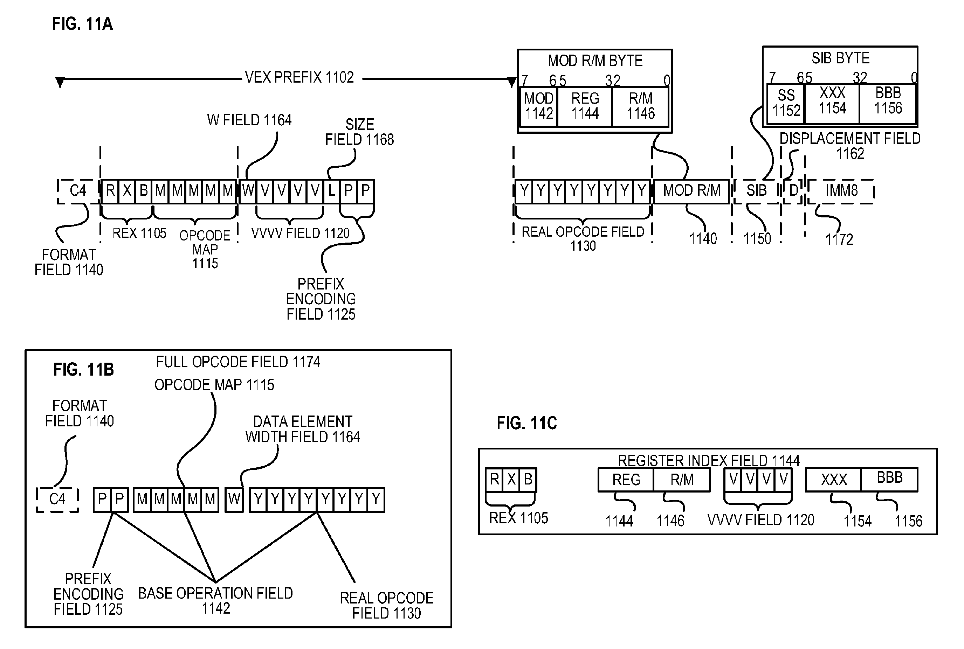

**Figure 11A** illustrates an exemplary AVX instruction format including a VEX prefix 1102, real opcode field 1130, Mod R/M byte 1140, SIB byte 1150, displacement field 1162, and IMM8 1172. **Figure 11B** illustrates which fields from **Figure 11A** make up a full opcode field 1174 and a base operation field 1142. Figure 11C illustrates which fields from Figure 11A make up a register index field 1144.

VEX Prefix (Bytes 0-2) 1102 is encoded in a three-byte form. The first byte is the Format Field 1140 (VEX Byte 0, bits [7:0]), which contains an explicit C4 byte value (the unique value used for distinguishing the C4 instruction format). The second-third bytes (VEX Bytes 1-2) include a number of bit fields providing specific capability. Specifically, REX field 1105 (VEX Byte 1, bits [7-5]) consists of a VEX.R bit field (VEX Byte 1, bit [7] - R), VEX.X bit field (VEX byte 1, bit [6] - X), and VEX.B bit field (VEX byte 1, bit[5] - B). Other fields of the instructions encode the lower three bits of the register indexes as is known in the art (rrr, xxx, and bbb), so that Rrrr, Xxxx, and Bbbb may be formed by adding VEX.R, VEX.X, and VEX.B. Opcode map field 1115 (VEX byte 1, bits [4:0] - mmmmm) includes content to encode an implied leading opcode byte. W Field 1164 (VEX byte 2, bit [7] - W) - is represented by the notation VEX.W, and provides different functions depending on the instruction. The role of VEX.vvvv 1120 (VEX Byte 2, bits [6:3]-vvvv) may include the following: 1) VEX.vvvv encodes the first source register operand, specified in inverted (Is complement) form and is valid for instructions with 2 or more source operands; 2) VEX.vvvv encodes the destination register operand, specified in Is complement form for certain vector shifts; or 3) VEX.vvvv does not encode any operand, the field is reserved and should contain 1111b. If VEX.L 1168 Size field (VEX byte 2, bit [2]-L) = 0, it indicates 128 bit vector; if VEX.L = 1, it indicates 256 bit vector. Prefix encoding field 1125 (VEX byte 2, bits [1:0]-pp) provides additional bits for the base operation field.

Real Opcode Field 1130 (Byte 3) is also known as the opcode byte. Part of the opcode is specified in this field.

MOD R/M Field 1140 (Byte 4) includes MOD field 1142 (bits [7-6]), Reg field 1144 (bits [5-3]), and R/M field 1146 (bits [2-0]). The role of Reg field 1144 may include the following: encoding either the destination register operand or a source register operand (the rrr of Rrrr), or be treated as an opcode extension and not used to encode any instruction operand. The role of R/M field 1146 may include the following: encoding the instruction operand that references a memory address, or encoding either the destination register operand or a source register operand.

Scale, Index, Base (SIB) - The content of Scale field 1150 (Byte 5) includes SS1152 (bits [7-6]), which is used for memory address generation. The contents of SIB.xxx 1154 (bits [5-3]) and SIB.bbb 1156 (bits [2-0]) have been previously referred to with regard to the register indexes Xxxx and Bbbb.

The Displacement Field 1162 and the immediate field (IMM8) 1172 contain address data.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

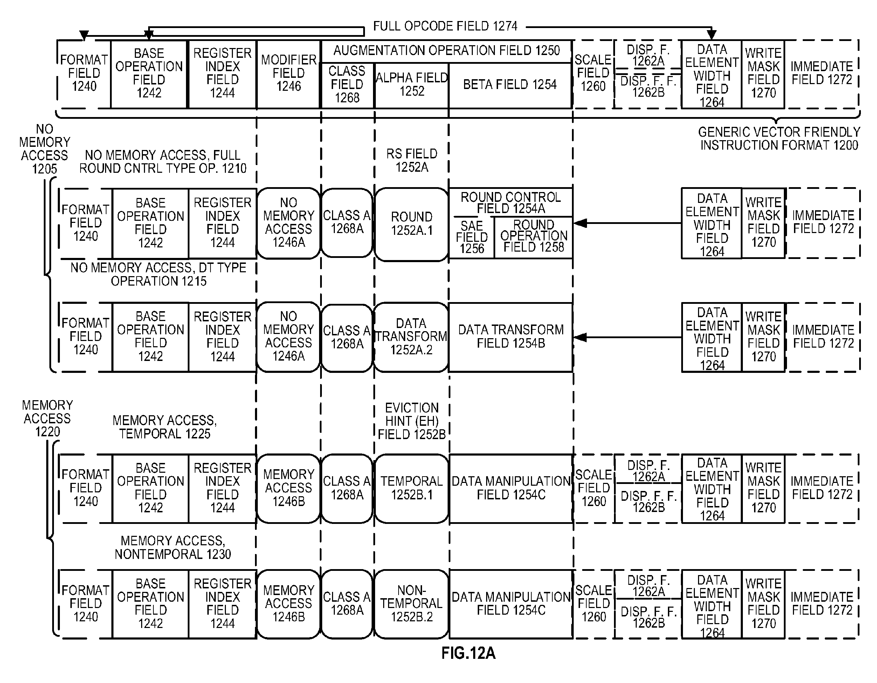

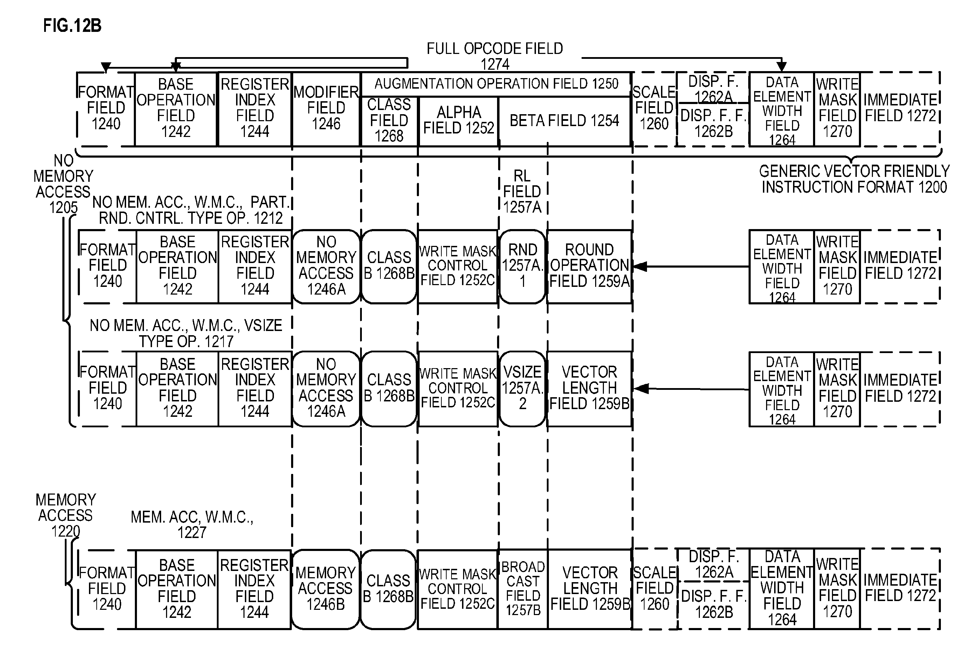

**Figures 12A-12B** are block diagrams illustrating a generic vector friendly instruction format and instruction templates thereof according to embodiments of the invention. **Figure 12A** is a block diagram illustrating a generic vector friendly instruction format and class A instruction templates thereof according to embodiments of the invention; while **Figure 12B** is a block diagram illustrating the generic vector friendly instruction format and class B instruction templates thereof according to embodiments of the invention. Specifically, a generic vector friendly instruction format 1200 for which are defined class A and class B instruction templates, both of which include no memory access 1205 instruction templates and memory access 1220 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 12A** include: 1) within the no memory access 1205 instruction templates there is shown a no memory access, full round control type operation 1210 instruction template and a no memory access, data transform type operation 1215 instruction template; and 2) within the memory access 1220 instruction templates there is shown a memory access, temporal 1225 instruction template and a memory access, non-temporal 1230 instruction template. The class B instruction templates in **Figure 12B** include: 1) within the no memory access 1205 instruction templates there is shown a no memory access, write mask control, partial round control type operation 1212 instruction template and a no memory access, write mask control, vsize type operation 1217 instruction template; and 2) within the memory access 1220 instruction templates there is shown a memory access, write mask control 1227 instruction template.

The generic vector friendly instruction format 1200 includes the following fields listed below in the order illustrated in **Figures 12A-12B****.**

Format field 1240 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1242 - its content distinguishes different base operations.

Register index field 1244 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1246 - its content distinguishes occurrences of instructions in the generic vector instruction format that specify memory access from those that do not; that is, between no memory access 1205 instruction templates and memory access 1220 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1250 - its content distinguishes which one of a variety of different operations to be performed in addition to the base operation. This field is context specific. In one embodiment of the invention, this field is divided into a class field 1268, an alpha field 1252, and a beta field 1254. The augmentation operation field 1250 allows common groups of operations to be performed in a single instruction rather than 2, 3, or 4 instructions.

Scale field 1260 - its content allows for the scaling of the index field's content for memory address generation (e.g., for address generation that uses 2^{scale} * index + base).

Displacement Field 1262A- its content is used as part of memory address generation (e.g., for address generation that uses 2^{scale} * index + base + displacement).

Displacement Factor Field 1262B (note that the juxtaposition of displacement field 1262A directly over displacement factor field 1262B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1274 (described later herein) and the data manipulation field 1254C. The displacement field 1262A and the displacement factor field 1262B are optional in the sense that they are not used for the no memory access 1205 instruction templates and/or different embodiments may implement only one or none of the two.

Data element width field 1264 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1270 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1270 allows for partial vector operations, including loads, stores, arithmetic, logical, etc. While embodiments of the invention are described in which the write mask field's 1270 content selects one of a number of write mask registers that contains the write mask to be used (and thus the write mask field's 1270 content indirectly identifies that masking to be performed), alternative embodiments instead or additional allow the mask write field's 1270 content to directly specify the masking to be performed.

Immediate field 1272 - its content allows for the specification of an immediate. This field is optional in the sense that is it not present in an implementation of the generic vector friendly format that does not support immediate and it is not present in instructions that do not use an immediate.

Class field 1268 - its content distinguishes between different classes of instructions. With reference to **Figures 12A-B**, the contents of this field select between class A and class B instructions. In **Figures 12A-B**, rounded corner squares are used to indicate a specific value is present in a field (e.g., class A 1268A and class B 1268B for the class field 1268 respectively in **Figures 12A-B**).

### Instruction Templates of Class A

In the case of the non-memory access 1205 instruction templates of class A, the alpha field 1252 is interpreted as an RS field 1252A, whose content distinguishes which one of the different augmentation operation types are to be performed (e.g., round 1252A.1 and data transform 1252A.2 are respectively specified for the no memory access, round type operation 1210 and the no memory access, data transform type operation 1215 instruction templates), while the beta field 1254 distinguishes which of the operations of the specified type is to be performed. In the no memory access 1205 instruction templates, the scale field 1260, the displacement field 1262A, and the displacement scale filed 1262B are not present.

### No-Memory Access Instruction Templates - Full Round Control Type Operation

In the no memory access full round control type operation 1210 instruction template, the beta field 1254 is interpreted as a round control field 1254A, whose content(s) provide static rounding. While in the described embodiments of the invention the round control field 1254A includes a suppress all floating point exceptions (SAE) field 1256 and a round operation control field 1258, alternative embodiments may support may encode both these concepts into the same field or only have one or the other of these concepts/fields (e.g., may have only the round operation control field 1258).

SAE field 1256 - its content distinguishes whether or not to disable the exception event reporting; when the SAE field's 1256 content indicates suppression is enabled, a given instruction does not report any kind of floating-point exception flag and does not raise any floating point exception handler.

Round operation control field 1258 - its content distinguishes which one of a group of rounding operations to perform (e.g., Round-up, Round-down, Round-towards-zero and Round-to-nearest). Thus, the round operation control field 1258 allows for the changing of the rounding mode on a per instruction basis. In one embodiment of the invention where a processor includes a control register for specifying rounding modes, the round operation control field's 1250 content overrides that register value.

### No Memory Access Instruction Templates - Data Transform Type Operation

In the no memory access data transform type operation 1215 instruction template, the beta field 1254 is interpreted as a data transform field 1254B, whose content distinguishes which one of a number of data transforms is to be performed (e.g., no data transform, swizzle, broadcast).

In the case of a memory access 1220 instruction template of class A, the alpha field 1252 is interpreted as an eviction hint field 1252B, whose content distinguishes which one of the eviction hints is to be used (in **Figure 12A****,** temporal 1252B.1 and non-temporal 1252B.2 are respectively specified for the memory access, temporal 1225 instruction template and the memory access, non-temporal 1230 instruction template), while the beta field 1254 is interpreted as a data manipulation field 1254C, whose content distinguishes which one of a number of data manipulation operations (also known as primitives) is to be performed (e.g., no manipulation; broadcast; up conversion of a source; and down conversion of a destination). The memory access 1220 instruction templates include the scale field 1260, and optionally the displacement field 1262A or the displacement scale field 1262B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1252 is interpreted as a write mask control (Z) field 1252C, whose content distinguishes whether the write masking controlled by the write mask field 1270 should be a merging or a zeroing.

In the case of the non-memory access 1205 instruction templates of class B, part of the beta field 1254 is interpreted as an RL field 1257A, whose content distinguishes which one of the different augmentation operation types are to be performed (e.g., round 1257A.1 and vector length (VSIZE) 1257A.2 are respectively specified for the no memory access, write mask control, partial round control type operation 1212 instruction template and the no memory access, write mask control, VSIZE type operation 1217 instruction template), while the rest of the beta field 1254 distinguishes which of the operations of the specified type is to be performed. In the no memory access 1205 instruction templates, the scale field 1260, the displacement field 1262A, and the displacement scale filed 1262B are not present.

In the no memory access, write mask control, partial round control type operation 1210 instruction template, the rest of the beta field 1254 is interpreted as a round operation field 1259A and exception event reporting is disabled (a given instruction does not report any kind of floating-point exception flag and does not raise any floating point exception handler).

Round operation control field 1259A - just as round operation control field 1258, its content distinguishes which one of a group of rounding operations to perform (e.g., Round-up, Round-down, Round-towards-zero and Round-to-nearest). Thus, the round operation control field 1259A allows for the changing of the rounding mode on a per instruction basis. In one embodiment of the invention where a processor includes a control register for specifying rounding modes, the round operation control field's 1250 content overrides that register value.

In the no memory access, write mask control, VSIZE type operation 1217 instruction template, the rest of the beta field 1254 is interpreted as a vector length field 1259B, whose content distinguishes which one of a number of data vector lengths is to be performed on (e.g., 128, 256, or 512 byte).

In the case of a memory access 1220 instruction template of class B, part of the beta field 1254 is interpreted as a broadcast field 1257B, whose content distinguishes whether or not the broadcast type data manipulation operation is to be performed, while the rest of the beta field 1254 is interpreted the vector length field 1259B. The memory access 1220 instruction templates include the scale field 1260, and optionally the displacement field 1262A or the displacement scale field 1262B.

With regard to the generic vector friendly instruction format 1200, a full opcode field 1274 is shown including the format field 1240, the base operation field 1242, and the data element width field 1264. While one embodiment is shown where the full opcode field 1274 includes all of these fields, the full opcode field 1274 includes less than all of these fields in embodiments that do not support all of them. The full opcode field 1274 provides the operation code (opcode).

The augmentation operation field 1250, the data element width field 1264, and the write mask field 1270 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

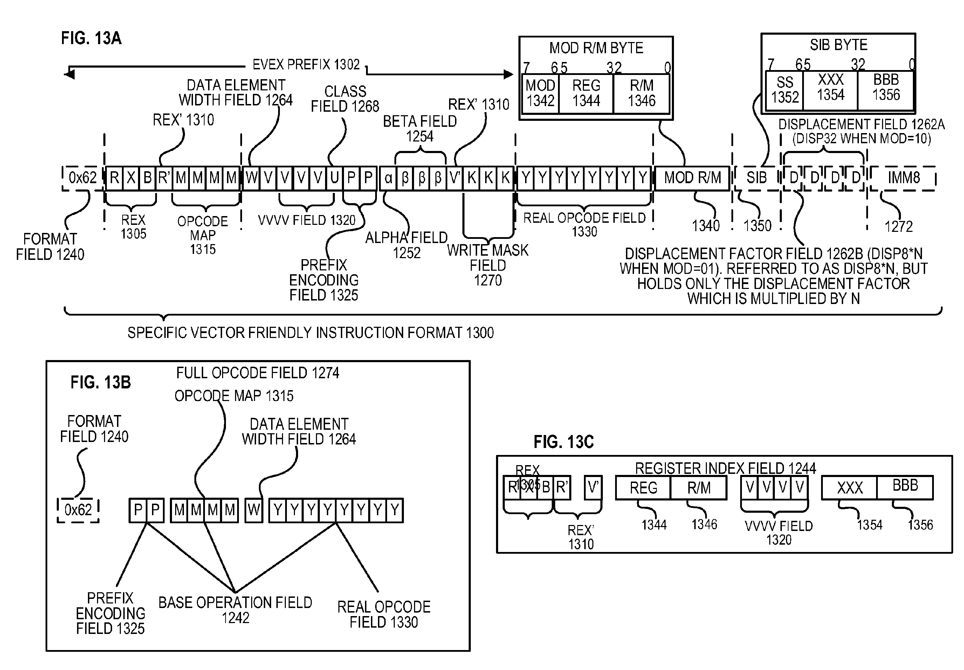

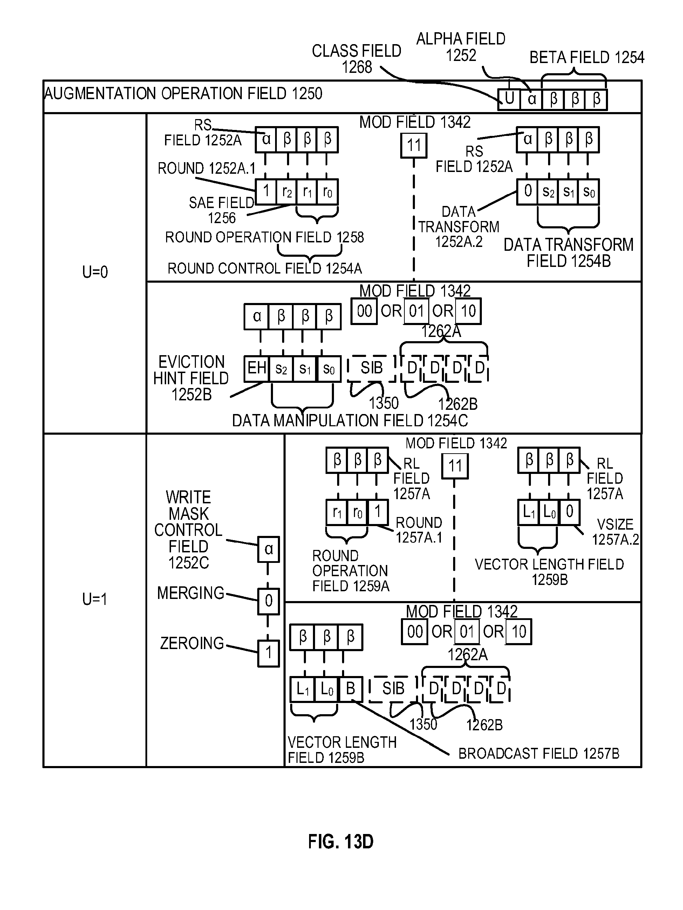

**Figure 13** is a block diagram illustrating an exemplary specific vector friendly instruction format according to embodiments of the invention. **Figure 13** shows a specific vector friendly instruction format 1300 that is specific in the sense that it specifies the location, size, interpretation, and order of the fields, as well as values for some of those fields. The specific vector friendly instruction format 1300 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 12** into which the fields from **Figure 13** map are illustrated.

It should be understood that, although embodiments of the invention are described with reference to the specific vector friendly instruction format 1300 in the context of the generic vector friendly instruction format 1200 for illustrative purposes, the invention is not limited to the specific vector friendly instruction format 1300 except where claimed. For example, the generic vector friendly instruction format 1200 contemplates a variety of possible sizes for the various fields, while the specific vector friendly instruction format 1300 is shown as having fields of specific sizes. By way of specific example, while the data element width field 1264 is illustrated as a one bit field in the specific vector friendly instruction format 1300, the invention is not so limited (that is, the generic vector friendly instruction format 1200 contemplates other sizes of the data element width field 1264).

The generic vector friendly instruction format 1200 includes the following fields listed below in the order illustrated in **Figure 13A****.**

EVEX Prefix (Bytes 0-3) 1302 - is encoded in a four-byte form.

Format Field 1240 (EVEX Byte 0, bits [7:0]) - the first byte (EVEX Byte 0) is the format field 1240 and it contains 0x62 (the unique value used for distinguishing the vector friendly instruction format in one embodiment of the invention).

The second-fourth bytes (EVEX Bytes 1-3) include a number of bit fields providing specific capability.

REX field 1305 (EVEX Byte 1, bits [7-5]) - consists of a EVEX.R bit field (EVEX Byte 1, bit [7] - R), EVEX.X bit field (EVEX byte 1, bit [6] - X), and 1257BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1210 - this is the first part of the REX' field 1210 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1315 (EVEX byte 1, bits [3:0] - mmmm) - its content encodes an implied leading opcode byte (OF, 0F 38, or 0F 3).

Data element width field 1264 (EVEX byte 2, bit [7] - W) - is represented by the notation EVEX.W. EVEX.W is used to define the granularity (size) of the datatype (either 32-bit data elements or 64-bit data elements).

EVEX.vvvv 1320 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 1320 encodes the 4 low-order bits of the first source register specifier stored in inverted (1s complement) form. Depending on the instruction, an extra different EVEX bit field is used to extend the specifier size to 32 registers.

EVEX.U 1268 Class field (EVEX byte 2, bit [2]-U) - If EVEX.U = 0, it indicates class A or EVEX.U0; if EVEX.U = 1, it indicates class B or EVEX.U1.

Prefix encoding field 1325 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1252 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 1254 (EVEX byte 3, bits [6:4]-SSS, also known as EVEX.s₂₋₀, EVEX.r₂₋₀, EVEX.rr1, EVEX.LL0, EVEX.LLB; also illustrated with βββ) - as previously described, this field is context specific.

REX' field 1210 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1270 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1330 (Byte 4) is also known as the opcode byte. Part of the opcode is specified in this field.

MOD R/M Field 1340 (Byte 5) includes MOD field 1342, Reg field 1344, and R/M field 1346. As previously described, the MOD field's 1342 content distinguishes between memory access and non-memory access operations. The role of Reg field 1344 can be summarized to two situations: encoding either the destination register operand or a source register operand, or be treated as an opcode extension and not used to encode any instruction operand. The role of R/M field 1346 may include the following: encoding the instruction operand that references a memory address, or encoding either the destination register operand or a source register operand.

Scale, Index, Base (SIB) Byte (Byte 6) - As previously described, the scale field's 1250 content is used for memory address generation. SIB.xxx 1354 and SIB.bbb 1356 - the contents of these fields have been previously referred to with regard to the register indexes Xxxx and Bbbb.

Displacement field 1262A (Bytes 7-10) - when MOD field 1342 contains 10, bytes 7-10 are the displacement field 1262A, and it works the same as the legacy 32-bit displacement (disp32) and works at byte granularity.

Displacement factor field 1262B (Byte 7) - when MOD field 1342 contains 01, byte 7 is the displacement factor field 1262B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1262B is a reinterpretation of disp8; when using displacement factor field 1262B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1262B substitutes the legacy x86 instruction set 8-bit displacement. Thus, the displacement factor field 1262B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 1272 operates as previously described.

### Full Opcode Field

**Figure 13B** is a block diagram illustrating the fields of the specific vector friendly instruction format 1300 that make up the full opcode field 1274 according to one embodiment of the invention. Specifically, the full opcode field 1274 includes the format field 1240, the base operation field 1242, and the data element width (W) field 1264. The base operation field 1242 includes the prefix encoding field 1325, the opcode map field 1315, and the real opcode field 1330.

### Register Index Field

**Figure 13C** is a block diagram illustrating the fields of the specific vector friendly instruction format 1300 that make up the register index field 1244 according to one embodiment of the invention. Specifically, the register index field 1244 includes the REX field 1305, the REX' field 1310, the MODR/M.reg field 1344, the MODR/M.r/m field 1346, the VVVV field 1320, xxx field 1354, and the bbb field 1356.

### Augmentation Operation Field

**Figure 13D** is a block diagram illustrating the fields of the specific vector friendly instruction format 1300 that make up the augmentation operation field 1250 according to one embodiment of the invention. When the class (U) field 1268 contains 0, it signifies EVEX.U0 (class A 1268A); when it contains 1, it signifies EVEX.U1 (class B 1268B). When U=0 and the MOD field 1342 contains 11 (signifying a no memory access operation), the alpha field 1252 (EVEX byte 3, bit [7] - EH) is interpreted as the rs field 1252A. When the rs field 1252A contains a 1 (round 1252A.1), the beta field 1254 (EVEX byte 3, bits [6:4]- SSS) is interpreted as the round control field 1254A. The round control field 1254A includes a one bit SAE field 1256 and a two bit round operation field 1258. When the rs field 1252A contains a 0 (data transform 1252A.2), the beta field 1254 (EVEX byte 3, bits [6:4]- SSS) is interpreted as a three bit data transform field 1254B. When U=0 and the MOD field 1342 contains 00, 01, or 10 (signifying a memory access operation), the alpha field 1252 (EVEX byte 3, bit [7] - EH) is interpreted as the eviction hint (EH) field 1252B and the beta field 1254 (EVEX byte 3, bits [6:4]- SSS) is interpreted as a three bit data manipulation field 1254C.

When U=1, the alpha field 1252 (EVEX byte 3, bit [7] - EH) is interpreted as the write mask control (Z) field 1252C. When U=1 and the MOD field 1342 contains 11 (signifying a no memory access operation), part of the beta field 1254 (EVEX byte 3, bit [4]- S₀) is interpreted as the RL field 1257A; when it contains a 1 (round 1257A.1) the rest of the beta field 1254 (EVEX byte 3, bit [6-5]- S₂₋₁) is interpreted as the round operation field 1259A, while when the RL field 1257A contains a 0 (VSIZE 1257.A2) the rest of the beta field 1254 (EVEX byte 3, bit [6-5]- S₂₋₁) is interpreted as the vector length field 1259B (EVEX byte 3, bit [6-5]- L₁₋₀). When U=1 and the MOD field 1342 contains 00, 01, or 10 (signifying a memory access operation), the beta field 1254 (EVEX byte 3, bits [6:4]- SSS) is interpreted as the vector length field 1259B (EVEX byte 3, bit [6-5]- L₁₋₀) and the broadcast field 1257B (EVEX byte 3, bit [4]- B).

### Exemplary Register Architecture

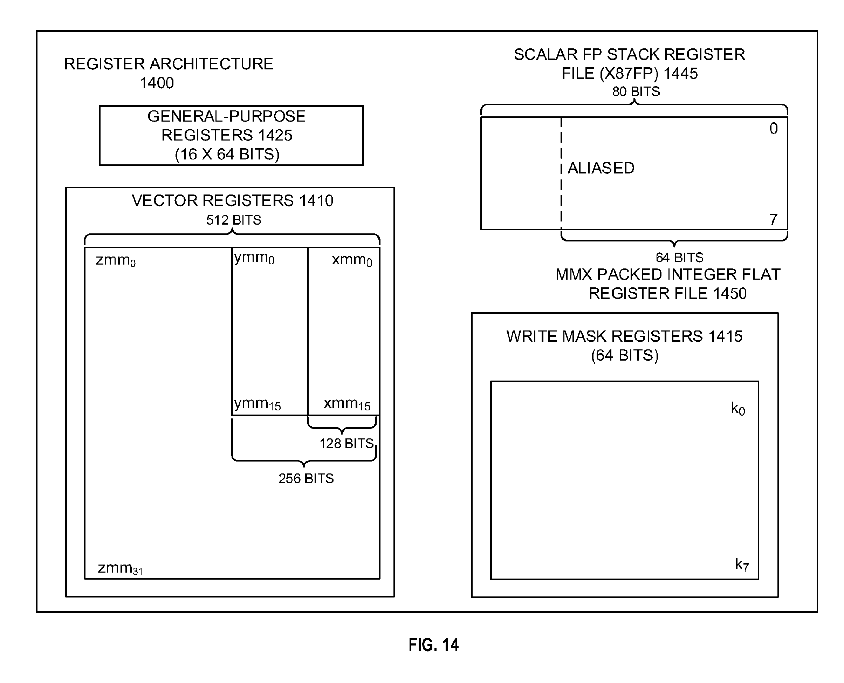

**Figure 14** is a block diagram of a register architecture 1400 according to one embodiment of the invention. In the embodiment illustrated, there are 32 vector registers 1410 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1300 operates on these overlaid register file as illustrated in the below tables.

| Adjustable Vector Length | Class | Operations | Registers |
|---|---|---|---|
| Instruction Templates that do not include the vector length field 1259B | A (Figure 12A; U=0) | 1210, 1215, 1225, 1230 | zmm registers (the vector length is 64 byte) |
| | B (Figure 12B; U=1) | 1212 | zmm registers (the vector length is 64 byte) |
| Instruction templates that do include the vector length field 1259B | B (Figure 12B; U=1) | 1217, 1227 | zmm, ymm, or xmm registers (the vector length is 64 byte, 32 byte, or 16 byte) depending on the vector length field 1259B |

In other words, the vector length field 1259B selects between a maximum length and one or more other shorter lengths, where each such shorter length is half the length of the preceding length; and instructions templates without the vector length field 1259B operate on the maximum vector length. Further, in one embodiment, the class B instruction templates of the specific vector friendly instruction format 1300 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1415 - in the embodiment illustrated, there are 8 write mask registers (k0 through k7), each 64 bits in size. In an alternate embodiment, the write mask registers 1415 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1425 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1445, on which is aliased the MMX packed integer flat register file 1450 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

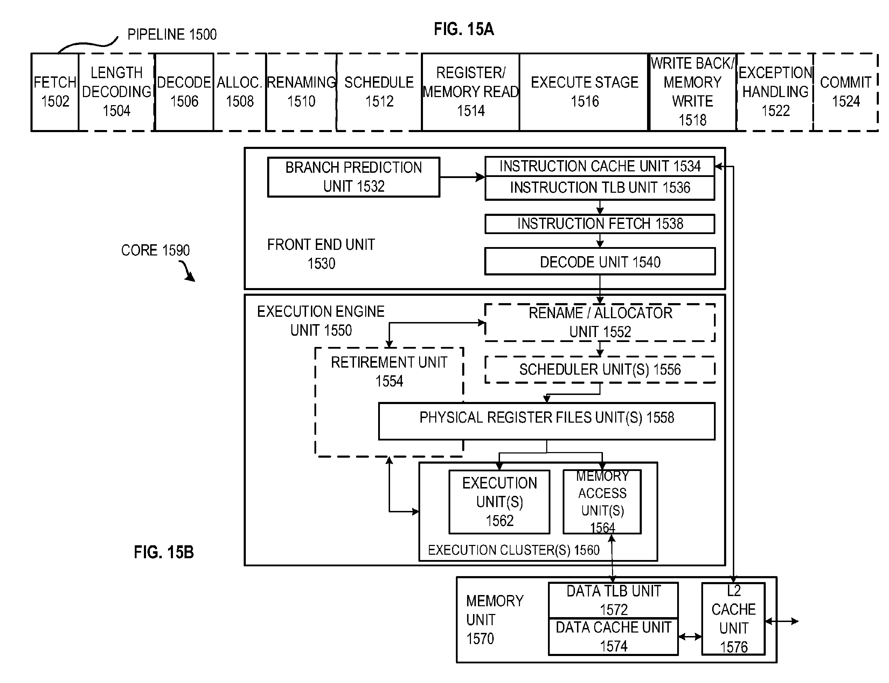

**Figure 15A** **is** a block diagram illustrating both an exemplary in-order pipeline and an exemplary register renaming, out-of-order issue/execution pipeline according to embodiments of the invention. Figure 15B is a block diagram illustrating both an exemplary embodiment of an in-order architecture core and an exemplary register renaming, out-of-order issue/execution architecture core to be included in a processor according to embodiments of the invention. The solid lined boxes in **Figures 15A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 15A****,** a processor pipeline 1500 includes a fetch stage 1502, a length decode stage 1504, a decode stage 1506, an allocation stage 1508, a renaming stage 1510, a scheduling (also known as a dispatch or issue) stage 1512, a register read/memory read stage 1514, an execute stage 1516, a write back/memory write stage 1518, an exception handling stage 1522, and a commit stage 1524.

**Figure 15B** shows processor core 1590 including a front end unit 1530 coupled to an execution engine unit 1550, and both are coupled to a memory unit 1570. The core 1590 may be a reduced instruction set computing (RISC) core, a complex instruction set computing (CISC) core, a very long instruction word (VLIW) core, or a hybrid or alternative core type. As yet another option, the core 1590 may be a special-purpose core, such as, for example, a network or communication core, compression engine, coprocessor core, general purpose computing graphics processing unit (GPGPU) core, graphics core, or the like.

The front end unit 1530 includes a branch prediction unit 1532 coupled to an instruction cache unit 1534, which is coupled to an instruction translation lookaside buffer (TLB) 1536, which is coupled to an instruction fetch unit 1538, which is coupled to a decode unit 1540. The decode unit 1540 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1540 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1590 includes a microcode ROM or other medium that stores microcode for certain macroinstructions (e.g., in decode unit 1540 or otherwise within the front end unit 1530). The decode unit 1540 is coupled to a rename/allocator unit 1552 in the execution engine unit 1550.

The execution engine unit 1550 includes the rename/allocator unit 1552 coupled to a retirement unit 1554 and a set of one or more scheduler unit(s) 1556. The scheduler unit(s) 1556 represents any number of different schedulers, including reservations stations, central instruction window, etc. The scheduler unit(s) 1556 is coupled to the physical register file(s) unit(s) 1558. Each of the physical register file(s) units 1558 represents one or more physical register files, different ones of which store one or more different data types, such as scalar integer, scalar floating point, packed integer, packed floating point, vector integer, vector floating point" status (e.g., an instruction pointer that is the address of the next instruction to be executed), etc. In one embodiment, the physical register file(s) unit 1558 comprises a vector registers unit, a write mask registers unit, and a scalar registers unit. These register units may provide architectural vector registers, vector mask registers, and general purpose registers. The physical register file(s) unit(s) 1558 is overlapped by the retirement unit 1554 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1554 and the physical register file(s) unit(s) 1558 are coupled to the execution cluster(s) 1560. The execution cluster(s) 1560 includes a set of one or more execution units 1562 and a set of one or more memory access units 1564. The execution units 1562 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1556, physical register file(s) unit(s) 1558, and execution cluster(s) 1560 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1564). It should also be understood that where separate pipelines are used, one or more of these pipelines may be out-of-order issue/execution and the rest in-order.

The set of memory access units 1564 is coupled to the memory unit 1570, which includes a data TLB unit 1572 coupled to a data cache unit 1574 coupled to a level 2 (L2) cache unit 1576. In one exemplary embodiment, the memory access units 1564 may include a load unit, a store address unit, and a store data unit, each of which is coupled to the data TLB unit 1572 in the memory unit 1570. The instruction cache unit 1534 is further coupled to a level 2 (L2) cache unit 1576 in the memory unit 1570. The L2 cache unit 1576 is coupled to one or more other levels of cache and eventually to a main memory.

By way of example, the exemplary register renaming, out-of-order issue/execution core architecture may implement the pipeline 1500 as follows: 1) the instruction fetch 1538 performs the fetch and length decoding stages 1502 and 1504; 2) the decode unit 1540 performs the decode stage 1506; 3) the rename/allocator unit 1552 performs the allocation stage 1508 and renaming stage 1510; 4) the scheduler unit(s) 1556 performs the schedule stage 1512; 5) the physical register file(s) unit(s) 1558 and the memory unit 1570 perform the register read/memory read stage 1514; the execution cluster 1560 perform the execute stage 1516; 6) the memory unit 1570 and the physical register file(s) unit(s) 1558 perform the write back/memory write stage 1518; 7) various units may be involved in the exception handling stage 1522; and 8) the retirement unit 1554 and the physical register file(s) unit(s) 1558 perform the commit stage 1524.

The core 1590 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1590 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 1534/1574 and a shared L2 cache unit 1576, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

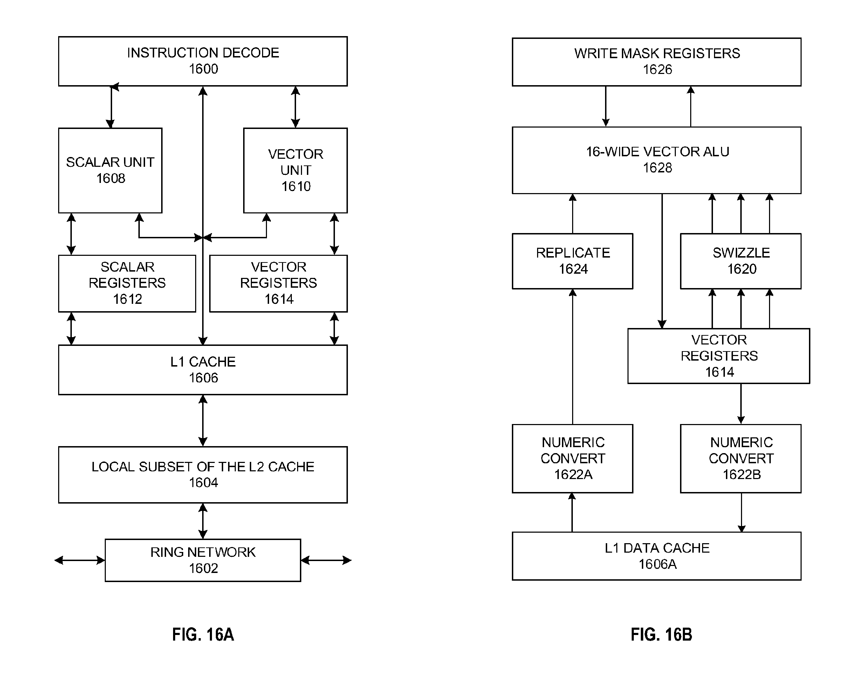

**Figures 16A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 16A** is a block diagram of a single processor core, along with its connection to the on-die interconnect network 1602 and with its local subset of the Level 2 (L2) cache 1604, according to embodiments of the invention. In one embodiment, an instruction decoder 1600 supports the x86 instruction set with a packed data instruction set extension. An L1 cache 1606 allows low-latency accesses to cache memory into the scalar and vector units. While in one embodiment (to simplify the design), a scalar unit 1608 and a vector unit 1610 use separate register sets (respectively, scalar registers 1612 and vector registers 1614) and data transferred between them is written to memory and then read back in from a level 1 (L1) cache 1606, alternative embodiments of the invention may use a different approach (e.g., use a single register set or include a communication path that allow data to be transferred between the two register files without being written and read back).

The local subset of the L2 cache 1604 is part of a global L2 cache that is divided into separate local subsets, one per processor core. Each processor core has a direct access path to its own local subset of the L2 cache 1604. Data read by a processor core is stored in its L2 cache subset 1604 and can be accessed quickly, in parallel with other processor cores accessing their own local L2 cache subsets. Data written by a processor core is stored in its own L2 cache subset 1604 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 16B** is an expanded view of part of the processor core in **Figure 16A** according to embodiments of the invention. **Figure 16B** includes an L1 data cache 1606A part of the L1 cache 1604, as well as more detail regarding the vector unit 1610 and the vector registers 1614. Specifically, the vector unit 1610 is a 16-wide vector processing unit (VPU) (see the 16-wide ALU 1628), which executes one or more of integer, single-precision float, and double-precision float instructions. The VPU supports swizzling the register inputs with swizzle unit 1620, numeric conversion with numeric convert units 1622A-B, and replication with replication unit 1624 on the memory input. Write mask registers 1626 allow predicating resulting vector writes.

### Processor with integrated memory controller and graphics

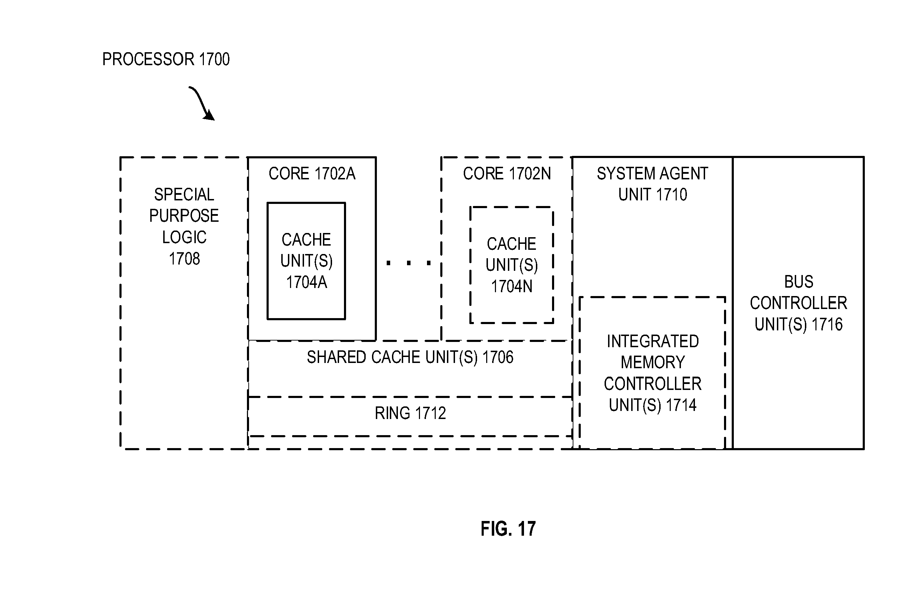

**Figure 17** is a block diagram of a processor 1700 that may have more than one core, may have an integrated memory controller, and may have integrated graphics according to embodiments of the invention. The solid lined boxes in **Figure 17** illustrate a processor 1700 with a single core 1702A, a system agent 1710, a set of one or more bus controller units 1716, while the optional addition of the dashed lined boxes illustrates an alternative processor 1700 with multiple cores 1702A-N, a set of one or more integrated memory controller unit(s) 1714 in the system agent unit 1710, and special purpose logic 1708.

Thus, different implementations of the processor 1700 may include: 1) a CPU with the special purpose logic 1708 being integrated graphics and/or scientific (throughput) logic (which may include one or more cores), and the cores 1702A-N being one or more general purpose cores (e.g., general purpose in-order cores, general purpose out-of-order cores, a combination of the two); 2) a coprocessor with the cores 1702A-N being a large number of special purpose cores intended primarily for graphics and/or scientific (throughput); and 3) a coprocessor with the cores 1702A-N being a large number of general purpose in-order cores. Thus, the processor 1700 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1700 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1706, and external memory (not shown) coupled to the set of integrated memory controller units 1714. The set of shared cache units 1706 may include one or more midlevel caches, such as level 2 (L2), level 3 (L3), level 4 (L4), or other levels of cache, a last level cache (LLC), and/or combinations thereof. While in one embodiment a ring based interconnect unit 1712 interconnects the integrated graphics logic 1708, the set of shared cache units 1706, and the system agent unit 1710/integrated memory controller unit(s) 1714, alternative embodiments may use any number of well-known techniques for interconnecting such units. In one embodiment, coherency is maintained between one or more cache units 1706 and cores 1702-A-N.

In some embodiments, one or more of the cores 1702A-N are capable of multi-threading. The system agent 1710 includes those components coordinating and operating cores 1702A-N. The system agent unit 1710 may include for example a power control unit (PCU) and a display unit. The PCU may be or include logic and components needed for regulating the power state of the cores 1702A-N and the integrated graphics logic 1708. The display unit is for driving one or more externally connected displays.

The cores 1702A-N may be homogenous or heterogeneous in terms of architecture instruction set; that is, two or more of the cores 1702A-N may be capable of execution the same instruction set, while others may be capable of executing only a subset of that instruction set or a different instruction set.

### Exemplary Computer Architectures

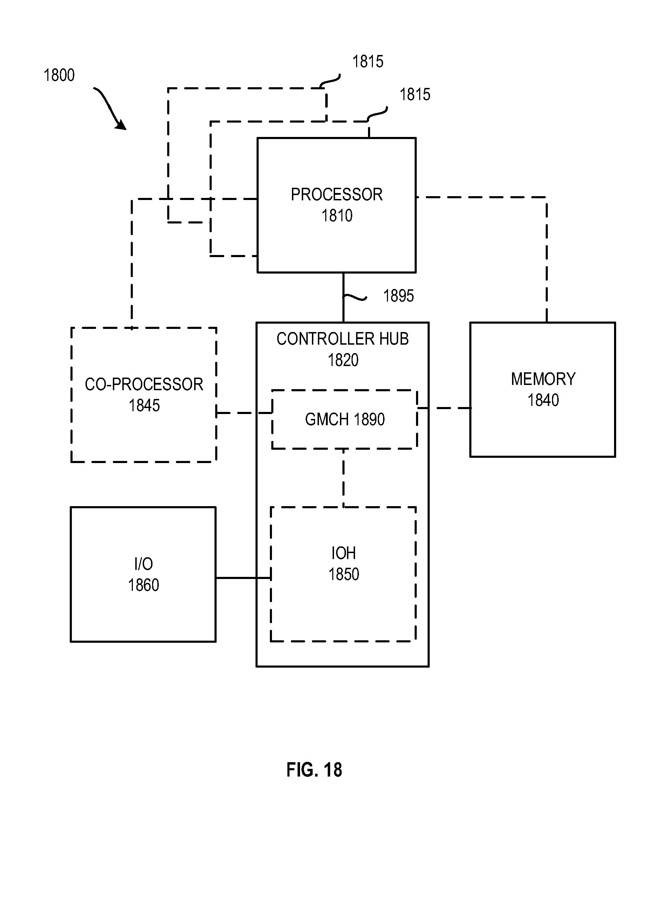

**Figures 18-21** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 18****,** shown is a block diagram of a system 1800 in accordance with one embodiment of the present invention. The system 1800 may include one or more processors 1810, 1815, which are coupled to a controller hub 1820. In one embodiment the controller hub 1820 includes a graphics memory controller hub (GMCH) 1890 and an Input/Output Hub (IOH) 1850 (which may be on separate chips); the GMCH 1890 includes memory and graphics controllers to which are coupled memory 1840 and a coprocessor 1845; the IOH 1850 is couples input/output (I/O) devices 1860 to the GMCH 1890. Alternatively, one or both of the memory and graphics controllers are integrated within the processor (as described herein), the memory 1840 and the coprocessor 1845 are coupled directly to the processor 1810, and the controller hub 1820 in a single chip with the IOH 1850.

The optional nature of additional processors 1815 is denoted in **Figure 18** with broken lines. Each processor 1810, 1815 may include one or more of the processing cores described herein and may be some version of the processor 1700.

The memory 1840 may be, for example, dynamic random access memory (DRAM), phase change memory (PCM), or a combination of the two. For at least one embodiment, the controller hub 1820 communicates with the processor(s) 1810, 1815 via a multi-drop bus, such as a frontside bus (FSB), point-to-point interface such as QuickPath Interconnect (QPI), or similar connection 1895.

In one embodiment, the coprocessor 1845 is a special-purpose processor, such as, for example, a high-throughput MIC processor, a network or communication processor, compression engine, graphics processor, GPGPU, embedded processor, or the like. In one embodiment, controller hub 1820 may include an integrated graphics accelerator.

There can be a variety of differences between the physical resources 1810, 1815 in terms of a spectrum of metrics of merit including architectural, microarchitectural, thermal, power consumption characteristics, and the like.

In one embodiment, the processor 1810 executes instructions that control data processing operations of a general type. Embedded within the instructions may be coprocessor instructions. The processor 1810 recognizes these coprocessor instructions as being of a type that should be executed by the attached coprocessor 1845. Accordingly, the processor 1810 issues these coprocessor instructions (or control signals representing coprocessor instructions) on a coprocessor bus or other interconnect, to coprocessor 1845. Coprocessor(s) 1845 accept and execute the received coprocessor instructions.

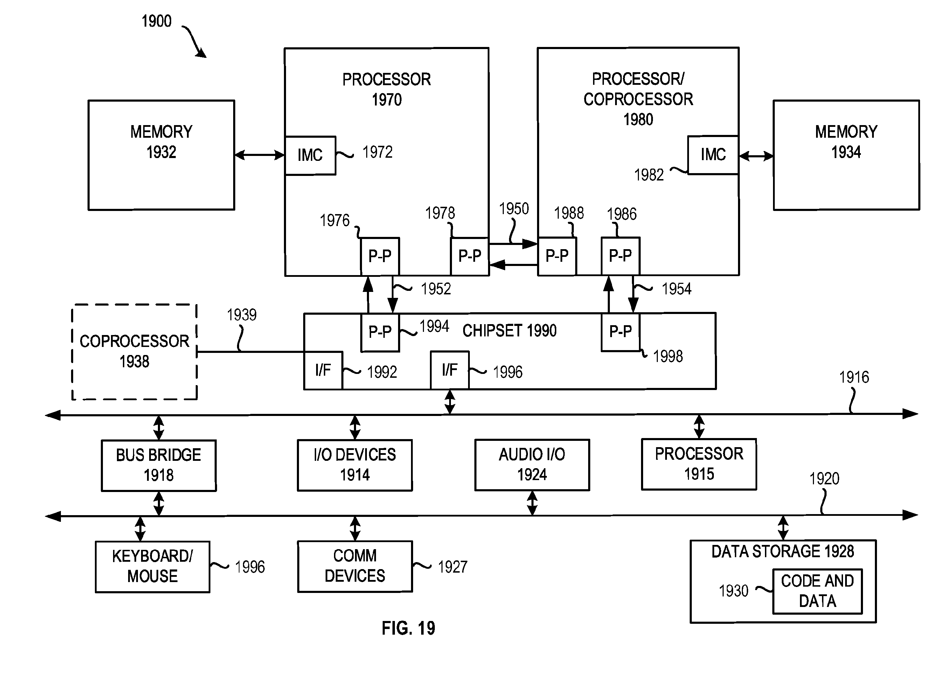

Referring now to **Figure 19****,** shown is a block diagram of a first more specific exemplary system 1900 in accordance with an embodiment of the present invention. As shown in **Figure 19****,** multiprocessor system 1900 is a point-to-point interconnect system, and includes a first processor 1970 and a second processor 1980 coupled via a point-to-point interconnect 1950. Each of processors 1970 and 1980 may be some version of the processor 1700. In one embodiment of the invention, processors 1970 and 1980 are respectively processors 1810 and 1815, while coprocessor 1938 is coprocessor 1845. In another embodiment, processors 1970 and 1980 are respectively processor 1810 coprocessor 1845.

Processors 1970 and 1980 are shown including integrated memory controller (IMC) units 1972 and 1982, respectively. Processor 1970 also includes as part of its bus controller units point-to-point (P-P) interfaces 1976 and 1978; similarly, second processor 1980 includes P-P interfaces 1986 and 1988. Processors 1970, 1980 may exchange information via a point-to-point (P-P) interface 1950 using P-P interface circuits 1978, 1988. As shown in **Figure 19****,** IMCs 1972 and 1982 couple the processors to respective memories, namely a memory 1932 and a memory 1934, which may be portions of main memory locally attached to the respective processors.

Processors 1970, 1980 may each exchange information with a chipset 1990 via individual P-P interfaces 1952, 1954 using point to point interface circuits 1976, 1994, 1986, 1998. Chipset 1990 may optionally exchange information with the coprocessor 1938 via a high-performance interface 1939. In one embodiment, the coprocessor 1938 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1990 may be coupled to a first bus 1916 via an interface 1996. In one embodiment, first bus 1916 may be a Peripheral Component Interconnect (PCI) bus, or a bus such as a PCI Express bus or another third generation I/O interconnect bus, although the scope of the present invention is not so limited.

As shown in **Figure 19**, various I/O devices 1914 may be coupled to first bus 1916, along with a bus bridge 1918 which couples first bus 1916 to a second bus 1920. In one embodiment, one or more additional processor(s) 1915, such as coprocessors, high-throughput MIC processors, GPGPU's, accelerators (such as, e.g., graphics accelerators or digital signal processing (DSP) units), field programmable gate arrays, or any other processor, are coupled to first bus 1916. In one embodiment, second bus 1920 may be a low pin count (LPC) bus. Various devices may be coupled to a second bus 1920 including, for example, a keyboard and/or mouse 1922, communication devices 1927 and a storage unit 1928 such as a disk drive or other mass storage device which may include instructions/code and data 1930, in one embodiment. Further, an audio I/O 1924 may be coupled to the second bus 1920. Note that other architectures are possible. For example, instead of the point-to-point architecture of **Figure 19**, a system may implement a multi-drop bus or other such architecture.

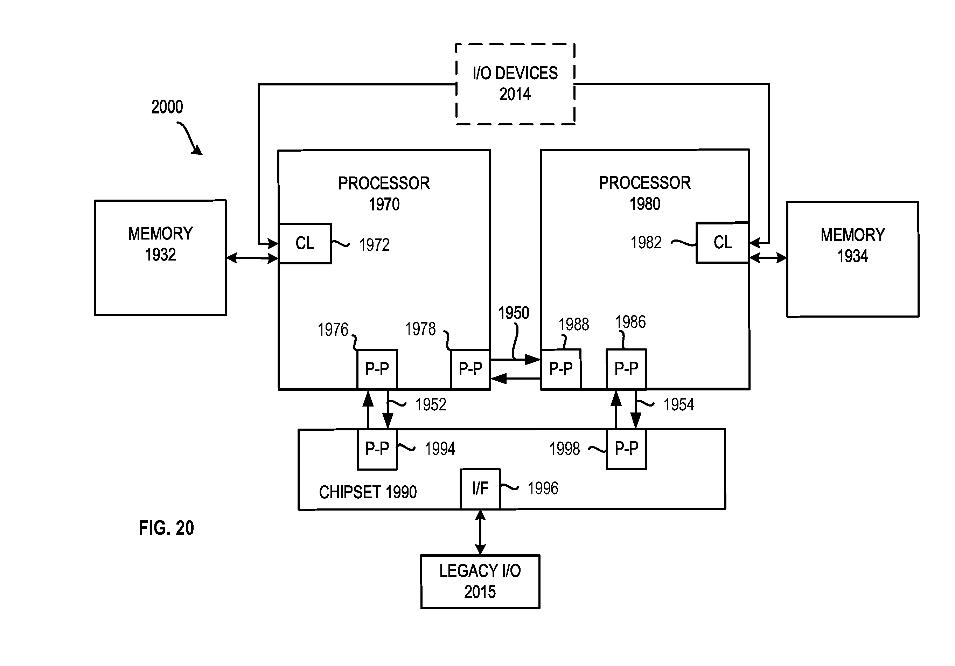

Referring now to **Figure 20**, shown is a block diagram of a second more specific exemplary system 2000 in accordance with an embodiment of the present invention. Like elements in **Figures 19** **and** **20** bear like reference numerals, and certain aspects of **Figure 19** have been omitted from **Figure 20** in order to avoid obscuring other aspects of **Figure 20**.

**Figure 20** illustrates that the processors 1970, 1980 may include integrated memory and I/O control logic ("CL") 1972 and 1982, respectively. Thus, the CL 1972, 1982 include integrated memory controller units and include I/O control logic. **Figure 20** illustrates that not only are the memories 1932, 1934 coupled to the CL 1972, 1982, but also that I/O devices 2014 are also coupled to the control logic 1972, 1982. Legacy I/O devices 2015 are coupled to the chipset 1990.

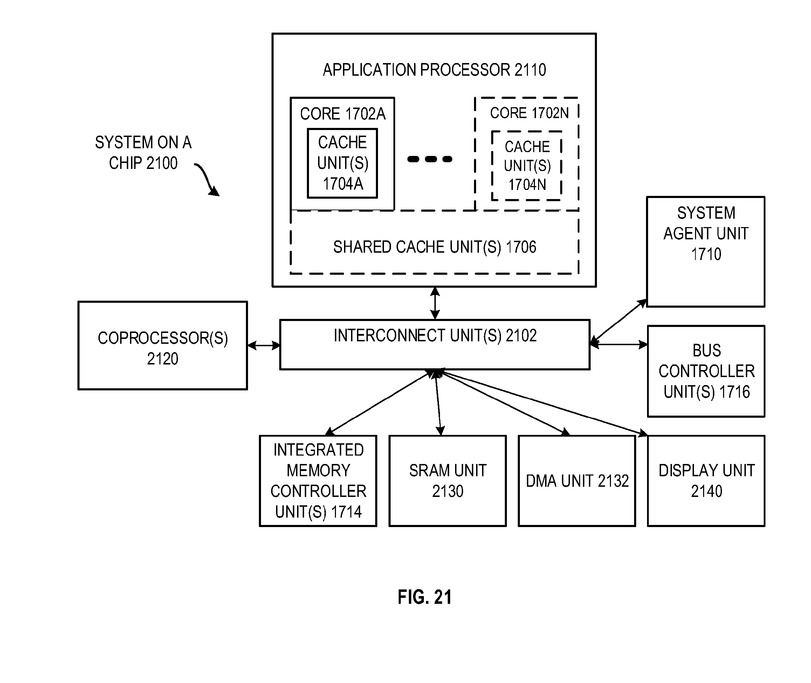

Referring now to **Figure 21**, shown is a block diagram of a SoC 2100 in accordance with an embodiment of the present invention. Similar elements in **Figure 17** bear like reference numerals. Also, dashed lined boxes are optional features on more advanced SoCs. In **Figure 21**, an interconnect unit(s) 2102 is coupled to: an application processor 2110 which includes a set of one or more cores 202A-N and shared cache unit(s) 1706; a system agent unit 1710; a bus controller unit(s) 1716; an integrated memory controller unit(s) 1714; a set or one or more coprocessors 2120 which may include integrated graphics logic, an image processor, an audio processor, and a video processor; an static random access memory (SRAM) unit 2130; a direct memory access (DMA) unit 2132; and a display unit 2140 for coupling to one or more external displays. In one embodiment, the coprocessor(s) 2120 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1930 illustrated in **Figure 19**, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

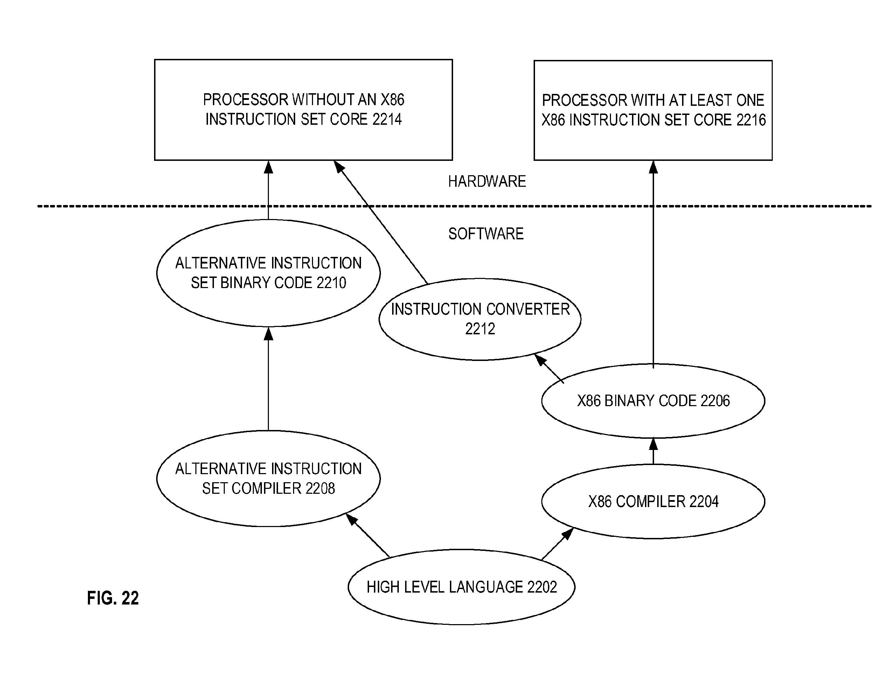

**Figure 22** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 22** shows a program in a high level language 2202 may be compiled using an x86 compiler 2204 to generate x86 binary code 2206 that may be natively executed by a processor with at least one x86 instruction set core 2216. The processor with at least one x86 instruction set core 2216 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2204 represents a compiler that is operable to generate x86 binary code 2206 (e.g., object code) that can, with or without additional linkage processing, be executed on the processor with at least one x86 instruction set core 2216. Similarly, **Figure 22** shows the program in the high level language 2202 may be compiled using an alternative instruction set compiler 2208 to generate alternative instruction set binary code 2210 that may be natively executed by a processor without at least one x86 instruction set core 2214 (e.g., a processor with cores that execute the MIPS instruction set of MIPS Technologies of Sunnyvale, CA and/or that execute the ARM instruction set of ARM Holdings of Sunnyvale, CA). The instruction converter 2212 is used to convert the x86 binary code 2206 into code that may be natively executed by the processor without an x86 instruction set core 2214. This converted code is not likely to be the same as the alternative instruction set binary code 2210 because an instruction converter capable of this is difficult to make; however, the converted code will accomplish the general operation and be made up of instructions from the alternative instruction set. Thus, the instruction converter 2212 represents software, firmware, hardware, or a combination thereof that, through emulation, simulation or any other process, allows a processor or other electronic device that does not have an x86 instruction set processor or core to execute the x86 binary code 2206.

Components, features, and details described for any of **Figures 3-10** may also optionally apply to any of **Figures 1-2**. Moreover, components, features, and details described for any of the apparatus may also optionally apply to any of the methods, which in embodiments may be performed by and/or with such apparatus. Any of the processors described herein may be included in any of the computer systems disclosed herein. In some embodiments, the instructions may have features or details of the instruction formats disclosed herein (e.g., the VEX or EVEX formats), although this is not required.

In the description and claims, the terms "coupled" and/or "connected," along with their derivatives, may have be used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still co-operate or interact with each other. For example, an execution unit may be coupled with a register and/or a decode unit through one or more intervening components. In the figures, arrows are used to show connections and couplings.

In the description and/or claims, the terms "logic," "unit," "module," or "component," may have been used. Each of these terms may be used to refer to hardware, firmware, software, or various combinations thereof. In example embodiments, each of these terms may refer to integrated circuitry, application specific integrated circuits, analog circuits, digital circuits, programmed logic devices, memory devices including instructions, and the like, and various combinations thereof. In some embodiments, these may include at least some hardware (e.g., transistors, gates, other circuitry components, etc.).

The term "and/or" may have been used. As used herein, the term "and/or" means one or the other or both (e.g., A and/or B means A or B or both A and B).

In the description above, specific details have been set forth in order to provide a thorough understanding of the embodiments. However, other embodiments may be practiced without some of these specific details. The scope of the invention is not to be determined by the specific examples provided above, but only by the claims below. In other instances, well-known circuits, structures, devices, and operations have been shown in block diagram form and/or without detail in order to avoid obscuring the understanding of the description. Where considered appropriate, reference numerals, or terminal portions of reference numerals, have been repeated among the figures to indicate corresponding or analogous elements, which may optionally have similar or the same characteristics, unless specified or clearly apparent otherwise.

Certain operations may be performed by hardware components, or may be embodied in machine-executable or circuit-executable instructions, that may be used to cause and/or result in a machine, circuit, or hardware component (e.g., a processor, potion of a processor, circuit, etc.) programmed with the instructions performing the operations. The operations may also optionally be performed by a combination of hardware and software. A processor, machine, circuit, or hardware may include specific or particular circuitry or other logic (e.g., hardware potentially combined with firmware and/or software) is operable to execute and/or process the instruction and store a result in response to the instruction.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operable to cause the machine to perform and/or result in the machine performing one or operations, methods, or techniques disclosed herein.

In some embodiments, the machine-readable medium may include a non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid matter.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Reference throughout this specification to "one embodiment," "an embodiment," "one or more embodiments," "some embodiments," for example, indicates that a particular feature may be included in the practice of the invention but is not necessarily required to be. Similarly, in the description various features are sometimes grouped together in a single embodiment, Figure, or description thereof for the purpose of streamlining the disclosure and aiding in the understanding of various inventive aspects. This method of disclosure, however, is not to be interpreted as reflecting an intention that the invention requires more features than are expressly recited in each claim. Rather, as the following claims reflect, inventive aspects lie in less than all features of a single disclosed embodiment. Thus, the claims following the Detailed Description are hereby expressly incorporated into this Detailed Description, with each claim standing on its own as a separate embodiment of the invention.

### EXAMPLE EMBODIMENTS

The following examples pertain to further embodiments. Specifics in the examples may be used anywhere in one or more embodiments.

Example 1 is a processor that includes a plurality of packed data registers, and a decode unit to decode an instruction. The instruction is to indicate a first source packed data operand that is to have a first plurality of data elements that are each to have a plurality of bit groups. The instruction is also to indicate a second source packed data operand that is to have a second plurality of data elements that are each to have a plurality of bit groups. Each data element of the first plurality of data elements is to correspond to a different data element of the second plurality of data elements in a corresponding position. Each bit group in each data element of the first plurality of data elements is to correspond to a different bit group in a corresponding position in a corresponding data element of the second plurality of data elements. An execution unit is coupled with the plurality of the packed data registers and the decode unit. The execution unit, in response to the instruction, is to store a result packed data operand in a destination storage location that is to be indicated by the instruction. The result packed data operand is to include every other bit group of the first source packed data operand interleaved with every other corresponding bit group of the second source packed data operand.

Example 2 includes the processor of Example 1, in which the execution unit, in response to the instruction, is to store the result packed data operand that is to include only odd-positioned bit groups of the first source packed data operand interleaved with corresponding odd-positioned bit group of the second source packed data operand.

Example 3 includes the processor of Example 1, in which the execution unit, in response to the instruction, is to store the result packed data operand that is to include only even-positioned bit groups of the first source packed data operand interleaved with corresponding even-positioned bit group of the second source packed data operand.

Example 4 includes the processor of Example 1, in which the decode unit is to decode the instruction which is to have at least one even/odd indication bit that is to indicate which one of corresponding even-positioned and corresponding odd-positioned bit groups of the first and second source packed data operands are to be included in the result packed data operand. Also, in which the execution unit, in response to the instruction, is to store the result packed data operand that is to have only the indicated one of the corresponding even-positioned and the corresponding odd-positioned bit groups of the first and second source packed data operands.

Example 5 includes the processor of Example 4, in which the execution unit, in response to the instruction, is to store the result packed data operand that is to have, as a least significant bit group, one of a least significant bit group of one of the first and second source packed data operands, and a next-to-least significant bit group of another of the first and second source packed data operands. Said one that is to be the least significant bit group of the result packed data operand to be indicated by the at least one even/odd indication bit.

Example 6 includes the processor of Example 4, in which the decode unit is to decode the instruction which is to have an immediate that is to have the at least one even/odd indication bit.

Example 7 includes the processor of Example 1, in which the decode unit is to decode the instruction which is to have at least one bit group size indication bit that is to indicate a size of the bit groups of the first source packed data operand.

Example 8 includes the processor of Example 7, in which the decode unit is to decode the instruction which is to have the at least one bit group size indication bit which is to indicate the size of the bit groups of the first source packed data operand as being any one of at least 2-bit sized bit groups, 4-bit sized bit groups, and 8-bit sized bit groups.

Example 9 includes the processor of Example 7, in which the decode unit is to decode the instruction which is to have an immediate that is to have the at least one bit group size indication bit.

Example 10 includes the processor of any one of Examples 1 to 9, in which the execution unit, in response to the instruction, is to store the result packed data operand that is to include every other 1-bit sized bit group of the first source packed data operand interleaved with every other corresponding 1-bit sized bit group of the second source packed data operand.

Example 11 includes the processor of any one of Examples 1 to 9, in which the execution unit, in response to the instruction, is to store the result packed data operand that is to include every other 2-bit sized bit group of the first source packed data operand interleaved with every other corresponding 2-bit sized bit group of the second source packed data operand.

Example 12 includes the processor of any one of Examples 1 to 9, in which the execution unit, in response to the instruction, is to store the result packed data operand that is to include every other 4-bit sized bit group of the first source packed data operand interleaved with every other corresponding 4-bit sized bit group of the second source packed data operand.

Example 13 includes the processor of any one of Examples 1 to 9, in which the decode unit is to decode the instruction that is to indicate the first source packed data operand that is to have the first plurality of data elements data elements which are one of 64-bit data elements and 32-bit data elements.

Example 14 includes the processor of any one of Examples 1 to 9, in which the decode unit is to decode the instruction which is to indicate a source packed data operation mask that is to have a plurality of mask elements.

Example 15 includes the processor of Example 14, in which the decode unit is to decode the instruction which is to indicate the first source packed data operand that is to have at least twice as many bit groups as there are mask elements in the source packed data operation mask.

Example 16 includes the processor of any one of Examples 1 to 9, in which the execution unit, in response to the instruction, is to swap positions of adjacent bit groups in all pairs of adjacent bit groups in one of the first and second source packed data operands.

Example 17 is a method in a processor that includes receiving an instruction. The instruction indicates a first source packed data operand having a first plurality of data elements each having a plurality of bit groups. The instruction indicates a second source packed data operand having a second plurality of data elements each having a plurality of bit groups. Each data element of the first plurality of data elements corresponds to a different data element of the second plurality of data elements in a corresponding position. Each bit group in each data element of the first plurality of data elements correspondes to a different bit group in a corresponding position in a corresponding data element of the second plurality of data elements. The method also includes storing a result packed data operand in a destination storage location in response to the instruction. The destination storage location is indicated by the instruction. The result packed data operand includes every other bit group of the first source packed data operand interleaved with every other corresponding bit group of the second source packed data operand.

Example 18 includes the method of Example 17, in which storing includes storing the result packed data operand including only odd-positioned bit groups of the first source packed data operand, which are one of 1-bit sized bit groups, 2-bit sized bit groups, and 4-bit sized bit groups, interleaved with corresponding odd-positioned bit group of the second source packed data operand.

Example 19 includes the method of Example 17, in which storing includes storing the result packed data operand including only even-positioned bit groups of the first source packed data operand, which are one of 1-bit sized bit groups, 2-bit sized bit groups, and 4-bit sized bit groups, interleaved with corresponding even-positioned bit group of the second source packed data operand.

Example 20 includes the method of Example 17, in which receiving includes receiving the instruction having at least one even/odd indication bit indicating which one of corresponding even-positioned and corresponding odd-positioned bit groups of the first and second source packed data operands are to be stored in the result packed data operand.

Example 21 includes the method of Example 17, in which receiving includes receiving the instruction having at least one size indication bit that is to indicate a size of the bit groups of the first source packed data operand as being any one of at least two sizes selected from 1-bit sized bit groups, 2-bit sized bit groups, 4-bit sized bit groups.

Example 22 is a system to process instructions including an interconnect, and a processor coupled with the interconnect. The processor to receive an instruction that is to indicate a first source packed data operand that is to have a first plurality of data elements that are each to have a plurality of bit groups. The instruction to indicate a second source packed data operand that is to have a second plurality of data elements that are each to have a plurality of bit groups. Each data element of the first plurality of data elements to correspond to a different data element of the second plurality of data elements in a corresponding position. Each bit group in each data element of the first plurality of data elements to correspond to a different bit group in a corresponding position in a corresponding data element of the second plurality of data elements. The instruction also to indicate a destination storage location. The processor, in response to the instruction, is to store a result packed data operand in the destination storage location. The result packed data operand is to include every other bit group of the first source packed data operand interleaved with every other corresponding bit group of the second source packed data operand. The system also includes a dynamic random access memory (DRAM) coupled with the interconnect. The DRAM stores a set of instructions to perform matrix transposition. The set of instructions, when executed by the processor, to cause the processor to perform operations including storing bit groups from at least two rows of at least two different matrices in the first source packed data operand.

Example 23 includes the system of Example 22, in which processor, in response to the instruction, is to store the result packed data operand that is to include only odd-positioned bit groups of the first source packed data operand interleaved with corresponding odd-positioned bit group of the second source packed data operand.

Example 24 is an article of manufacture including a non-transitory machine-readable storage medium. The non-transitory machine-readable storage medium stores an instruction that is to indicate a first source packed data operand that is to have a first plurality of data elements that are each to have a plurality of bit groups. The instruction also is to indicate a second source packed data operand that is to have a second plurality of data elements that are each to have a plurality of bit groups. Each data element of the first plurality of data elements to correspond to a different data element of the second plurality of data elements in a corresponding position. Each bit group in each data element of the first plurality of data elements to correspond to a different bit group in a corresponding position in a corresponding data element of the second plurality of data elements. The instruction if executed by a machine is to cause the machine to perform operations including storing a result packed data operand in a destination storage location that is to be indicated by the instruction. The result packed data operand to include every other bit group of the first source packed data operand interleaved with every other corresponding bit group of the second source packed data operand.

Example 25 includes the article of manufacture of Example 24, in which the instruction is to have at least one bit group size indication bit that is to indicate a size of the bit groups.

Example 26 is a processor or other apparatus that is operative to perform the method of any one of Examples 17 to 21.

Example 27 is a processor or other apparatus that includes means for performing the method of any one of Examples 17 to 21.

Example 28 is a processor or other apparatus that includes modules to perform the method of any one of Examples 17 to 21.

Example 29 is a processor that includes any combination of modules and/or units and/or logic and/or circuitry and/or means for performing the method of any one of Examples 17 to 21.

Example 30 is an article of manufacture that includes an optionally non-transitory machine-readable medium, which optionally stores or otherwise provides an instruction, which if and/or when executed by a processor, computer system, electronic device, or other machine, is operative to cause the machine to perform the method of any one of Examples 17 to 21.

Example 31 is a computer system, other electronic device, or other apparatus including a bus or other interconnect, the processor of any one of Examples 1 to 16 coupled with the interconnect, and at least one component coupled with the interconnect that is selected from a dynamic random access memory (DRAM), a network interface, a graphics chip, a wireless communications chip, a Global System for Mobile Communications (GSM) antenna, a phase change memory, and a video camera.

Example 32 is a processor or other apparatus substantially as described herein.

Example 33 is a processor or other apparatus that is operative to perform any method substantially as described herein.

Example 34 is a processor or other apparatus that is operative to perform any bit group interleave instruction substantially as described herein.

Example 35 is a processor or other apparatus including a decode unit to decode instructions of a first instruction set. The decode unit is to receive one or more instructions of the first instruction set that emulate a first instruction. The first instruction may be any bit group interleave instruction substantially as disclosed herein, and is to be of a second different instruction set. The processor or other apparatus also includes one or more execution units coupled with the decode unit to execute the one or more instructions of the first instruction set. The one or more execution units, in response to the one or more instructions of the first instruction set, are to store a result in a destination. The result may include any result substantially as disclosed herein for the first instruction.

Example 36 is a computer system or other electronic device that includes a processor having a decode unit to decode instructions of a first instruction set. The processor also has one or more execution units. The electronic device also includes a storage device coupled with the processor. The storage device is to store a first instruction, which may be any bit group interleave instruction substantially as disclosed herein, and which is to be of a second different instruction set. The storage device is also to store instructions to convert the first instruction into one or more instructions of the first instruction set. The one or more instructions of the first instruction set, when performed by the processor, are to cause the processor to store a result in a destination. The result may include any result substantially as disclosed herein for the first instruction.

## Claims

1. A processor comprising:
a plurality of packed data registers;
a decode unit to decode an instruction, the instruction to indicate a first source packed data operand that is to have a first plurality of data elements that are each to have a plurality of bit groups, and the instruction to indicate a second source packed data operand that is to have a second plurality of data elements that are each to have a plurality of bit groups, each data element of the first plurality of data elements to correspond to a different data element of the second plurality of data elements in a corresponding position, each bit group in each data element of the first plurality of data elements to correspond to a different bit group in a corresponding position in a corresponding data element of the second plurality of data elements; and
an execution unit coupled with the plurality of the packed data registers and the decode unit, the execution unit, in response to the instruction, to store a result packed data operand in a destination storage location that is to be indicated by the instruction, the result packed data operand to include every other bit group of the first source packed data operand interleaved with every other corresponding bit group of the second source packed data operand.

2. The processor of claim 1, wherein execution unit, in response to the instruction, is to store the result packed data operand that is to include only odd-positioned bit groups of the first source packed data operand interleaved with corresponding odd-positioned bit group of the second source packed data operand.

3. The processor of claim 1, wherein execution unit, in response to the instruction, is to store the result packed data operand that is to include only even-positioned bit groups of the first source packed data operand interleaved with corresponding even-positioned bit group of the second source packed data operand.

4. The processor of claim 1, wherein the decode unit is to decode the instruction which is to have at least one even/odd indication bit that is to indicate which one of corresponding even-positioned and corresponding odd-positioned bit groups of the first and second source packed data operands are to be included in the result packed data operand, and wherein the execution unit, in response to the instruction, is to store the result packed data operand that is to have only the indicated one of the corresponding even-positioned and the corresponding odd-positioned bit groups of the first and second source packed data operands.

5. The processor of claim 4, wherein the execution unit, in response to the instruction, is to store the result packed data operand that is to have, as a least significant bit group, one of a least significant bit group of one of the first and second source packed data operands, and a next-to-least significant bit group of another of the first and second source packed data operands, said one that is to be the least significant bit group of the result packed data operand to be indicated by the at least one even/odd indication bit.

6. The processor of claim 1, wherein the decode unit is to decode the instruction which is to have at least one bit group size indication bit that is to indicate a size of the bit groups of the first source packed data operand, and wherein the decode unit is to decode the instruction which is to have the at least one bit group size indication bit which is to indicate the size of the bit groups of the first source packed data operand as being any one of at least 2-bit sized bit groups, 4-bit sized bit groups.

7. The processor of any one of claim 1 to 6, wherein the execution unit, in response to the instruction, is to store the result packed data operand that is to include every other 1-bit sized or 2-bit sized or 4-bit sized bit group of the first source packed data operand interleaved with every other corresponding 1-bit sized or 2-bit sized or 4-bit sized sized bit group of the second source packed data operand.

8. The processor of any one of claim 1 to 6, wherein the decode unit is to decode the instruction which is to indicate a source packed data operation mask that is to have a plurality of mask elements, and wherein the decode unit is to decode the instruction which is to indicate the first source packed data operand that is to have at least twice as many bit groups as there are mask elements in the source packed data operation mask.

9. The processor of any one of claim 1 to 6, wherein the decode unit is to decode the instruction that is to indicate the first source packed data operand that is to have the first plurality of data elements data elements which are one of 64-bit data elements and 32-bit data elements, and wherein the execution unit, in response to the instruction, is to swap positions of adjacent bit groups in all pairs of adjacent bit groups in one of the first and second source packed data operands.

10. A method in a processor comprising:
receiving an instruction, the instruction indicating a first source packed data operand having a first plurality of data elements each having a plurality of bit groups, and the instruction indicating a second source packed data operand having a second plurality of data elements each having a plurality of bit groups, each data element of the first plurality of data elements corresponding to a different data element of the second plurality of data elements in a corresponding position, each bit group in each data element of the first plurality of data elements corresponding to a different bit group in a corresponding position in a corresponding data element of the second plurality of data elements; and
storing a result packed data operand in a destination storage location in response to the instruction, the destination storage location indicated by the instruction, the result packed data operand including every other bit group of the first source packed data operand interleaved with every other corresponding bit group of the second source packed data operand.

11. The method of claim 10, wherein storing comprises storing the result packed data operand including only odd-positioned bit groups of the first source packed data operand, which are one of 1-bit sized bit groups, 2-bit sized bit groups, and 4-bit sized bit groups, interleaved with corresponding odd-positioned bit group of the second source packed data operand.

12. The method of claim 10, wherein storing comprises storing the result packed data operand including only even-positioned bit groups of the first source packed data operand, which are one of 1-bit sized bit groups, 2-bit sized bit groups, and 4-bit sized bit groups, interleaved with corresponding even-positioned bit group of the second source packed data operand.

13. The method of claim 10, wherein receiving comprises receiving the instruction having at least one even/odd indication bit indicating which one of corresponding even-positioned and corresponding odd-positioned bit groups of the first and second source packed data operands are to be stored in the result packed data operand.

14. An apparatus comprising means for performing the method of any one of claims 10 to 13.

15. An article of manufacture comprising a non-transitory machine-readable medium that stores an instruction that if executed by a machine is operative to cause the machine to perform the method of any one of claims 10 to 13.
